# EUROPÄISCHE PATENTANMELDUNG

(11) **EP 4 512 652 A1**
(43) Veröffentlichungstag der Anmeldung: **26.02.2025**
(21) Anmeldenummer: 24193051.0
(22) Anmeldetag: 06.08.2024
(51) Int. Cl.: B60L 53/30, B60L 53/65, B60L 53/66, B60L 53/67

(54) **DATENVERARBEITUNGSVORRICHTUNG FÜR EIN PARKSYSTEM MIT MINDESTENS EINER LADESTATION**

(30) Priorität: 25.08.2023 DE 102023122831
(71) Anmelder: Scheidt & Bachmann GmbH, 41238 Mönchengladbach (DE)
(72) Erfinder: Hiegemann, Verena, 50126 Bergheim (DE); Lischka, Christian, 41199 Mönchengladbach (DE); Löffler, Stephan, 41468 Neuss (DE)
(74) Vertreter: Cohausz & Florack

(57) **Zusammenfassung**

Die Erfindung betrifft eine Datenverarbeitungsvorrichtung (100, 200) für ein Parksystem (222) mit mindestens einer Ladestation (250), umfassend ein erstes Empfangsmodul (104, 204), eingerichtet zum Empfangen eines ersten Kennzeichendatensatzes, enthaltend zumindest ein durch mindestens eine Kamera (242) des Parksystems (222) erfasstes Fahrzeugkennzeichen eines durch eine Durchfahrt (236) gefahrenen Fahrzeugs (248), ein zweites Empfangsmodul (106, 206), eingerichtet zum Empfangen eines Ladeanfragedatensatzes, enthaltend zumindest eine durch eine Ladestation (250) über ein mit dem Fahrzeug (248) verbundenes Ladekabel (254) erfasste Fahrzeugladekennung, mindestens eine Datenbank (112, 212), eingerichtet zum Speichern einer Mehrzahl von Fahrzeugladedatensätzen, enthaltend jeweils zumindest eine Fahrzeugladekennung und Fahrzeugkennzeichen eines jeweiligen Fahrzeugs (248), ein Zuordnungsmodul (108, 208), eingerichtet zum Zuordnen der empfangenen Fahrzeugladekennung zu dem empfangenen ersten Kennzeichendatensatz, basierend auf den in der Datenbank (112, 212) gespeicherten Fahrzeugladedatensätzen, und ein Freigabemodul (110, 210), eingerichtet zum automatischen Freigeben eines Ladevorgangs zum Laden des mit der Ladestation (250) über das Ladekabel (254) verbundene Fahrzeugs (248) nur bei einem Zuordnen der empfangenen Fahrzeugladekennung zu dem ersten Kennzeichendatensatz.

## Beschreibung

Die Erfindung betrifft eine Datenverarbeitungsvorrichtung für ein Parksystem mit mindestens einer Ladestation, umfassend ein erstes Empfangsmodul, eingerichtet zum Empfangen eines ersten Kennzeichendatensatzes, enthaltend zumindest ein durch mindestens eine Kamera des Parksystems erfasstes Fahrzeugkennzeichen eines durch eine Durchfahrt gefahrenen Fahrzeugs und umfassend ein zweites Empfangsmodul, eingerichtet zum Empfangen eines Ladeanfragedatensatzes, enthaltend zumindest eine durch eine Ladestation über ein mit dem Fahrzeug verbundenes Ladekabel erfasste Fahrzeugladekennung. Darüber hinaus betrifft die Erfindung ein Verfahren, ein Computerprogramm und ein Parksystem.

Ein Parksystem für bzw. mit Parkvorrichtungen, wie Parkplätze, Parkhäuser und dergleichen, verfügt in der Regel über eine oder mehrere Zufahrtsvorrichtung/en an einer entsprechenden Anzahl an Durchfahrten zu und/oder von einer Parkvorrichtung.

Beispielsweise kann als Zufahrtsvorrichtung eine Schranke mit einem schwenkbaren Schrankenbaum vorgesehen sein. Mit einer derartigen Zufahrtsvorrichtung wird insbesondere ein Durchfahren durch ein Fahrzeug einer Durchfahrt, an der die Zufahrtsvorrichtung angeordnet ist, von einem ersten Bereich in einen weiteren Bereich kontrolliert bzw. gesteuert.

So kann bei einem Parksystem mindestens eine Zufahrtsvorrichtung vorgesehen sein, um ein Durchfahren eines Fahrzeugs von einem nicht kontrollierten Bereich, beispielsweise einer (öffentlichen) Straße, in einen kontrollierten Bereich, beispielsweise den Parkbereich bzw. die Parkvorrichtung, zu steuern. Mit anderen Worten kann das Einfahren in die Parkvorrichtung durch eine Zufahrtsvorrichtung an einer Einfahrt des Parksystems gesteuert werden. Alternativ oder zusätzlich kann bei einem Parksystem eine mindestens eine Zufahrtsvorrichtung vorgesehen sein, um ein Durchfahren eines Fahrzeugs von dem kontrollierten Bereich in den nicht kontrollierten Bereich zu steuern. Mit anderen Worten kann ein Ausfahren eines Fahrzeugs an einer Ausfahrt aus der Parkvorrichtung durch eine Zufahrtsvorrichtung gesteuert werden.

Bei bekannten Zufahrtsvorrichtungen wird das Einfahren in eine Parkvorrichtung nach dem Erstellen eines Parktickets, wie eines Kurzparkertickets, aufgrund einer Nutzeraktion gewährt. Das Kurzparkerticket, insbesondere ein Papierticket, wird dann nach Ende einer Parkzeit bzw. Parkdauer von einem Benutzer an einem Automaten bezahlt und an der Ausfahrt durch eine Validatorvorrichtung der Zufahrtsvorrichtung überprüft. Bei einer positiven Prüfung wird ein Durchfahren der Durchfahrt (in diesem Fall die Ausfahrt) durch ein Freigabemodul freigegeben. Stellt die Validatorvorrichtung jedoch fest, dass das Ticket beispielsweise noch nicht bezahlt wurde oder dass die Zahlung zu lange zurückliegt, so bleibt die Zufahrtsvorrichtung geschlossen, die Durchfahrt gesperrt. Mit anderen Worten, ein Durchfahren der Durchfahrt wird durch ein Freigabemodul blockiert.

Ein stetiges Anliegen bei Parksystemen ist es, den Nutzerkomfort zu verbessern. Insbesondere werden die manuellen Nutzeraktionen als nutzerunfreundlich angesehen. Aus dem Stand der Technik sind hierzu bereits Parksysteme bekannt, bei denen die erforderlichen Nutzeraktionen reduziert werden können.

So sind Parksysteme bekannt, bei denen an einer Durchfahrt, insbesondere an jeder Durchfahrt, (jeweils) mindestens eine Kamera angeordnet ist, eingerichtet zum Erfassen des Fahrzeugkennzeichens eines durch die entsprechende Durchfahrt durchgefahrenen bzw. fahrenden Fahrzeugs. Dies umfasst insbesondere das Erfassen des Fahrzeugkennzeichens vor einem Durchfahren der Durchfahrt.

Das Parksystem kann eine Datenverarbeitungsvorrichtung mit einem Empfangsmodul umfassen, eingerichtet zum Empfangen eines Kennzeichendatensatzes, enthaltend zumindest das durch die mindestens eine Kamera des Parksystems erfasste Fahrzeugkennzeichen und insbesondere eine Zeitangabe des Erfassens des Fahrzeugkennzeichens. Insbesondere kann ein erster Kennzeichendatensatz in Form eines Einfahrtdatensatzes empfangen werden, der als Zeitangabe eine durch die Kamera detektierte Einfahrtszeit des Fahrzeugs enthalten kann. Vor einem Ausfahren aus der Parkvorrichtung kann dann die Parkdienstleistung an einem Automaten bezahlt werden, beispielsweise durch ein Eingeben des Fahrzeugkennzeichens. Dann kann der zugehörige Einfahrtdatensatz ermittelt werden. Anschließend bestimmt ein Abrechnungsmodul den für die Parkdienstleistung bzw. den Parkvorgang zu entrichtenden Betrag, insbesondere basierend auf der aus der Einfahrtszeit und dem augenblicklichen Zeitpunkt bestimmten Parkdauer und einem vorgegebenen Tarifdatum.

In der heutigen Zeit umfassen Parksysteme vermehrt Ladestationen, jeweils eingerichtet zum Laden von Fahrzeugen bzw. von elektrischen Energiespeichern (insbesondere einer Antriebsbatterie) der (Elektro-)Fahrzeuge. So kann insbesondere eine Mehrzahl von Stellplätzen einer Parkvorrichtung mit mindestens einer Ladestation ausgestattet sein. Wenn ein solches Fahrzeug in die Parkvorrichtung eingefahren ist und auf einem Stellplatz an einer Ladestation abgestellt ist, kann es über ein Ladekabel mit der Ladestation verbunden werden, um elektrische Energie zu beziehen. Nachteilig an den bekannten Parksystemen ist jedoch, dass der Nutzerkomfort reduziert ist. Auch hier ist ein wesentlicher Grund, dass eine Mehrzahl von manuellen Nutzerhandlungen erforderlich ist.

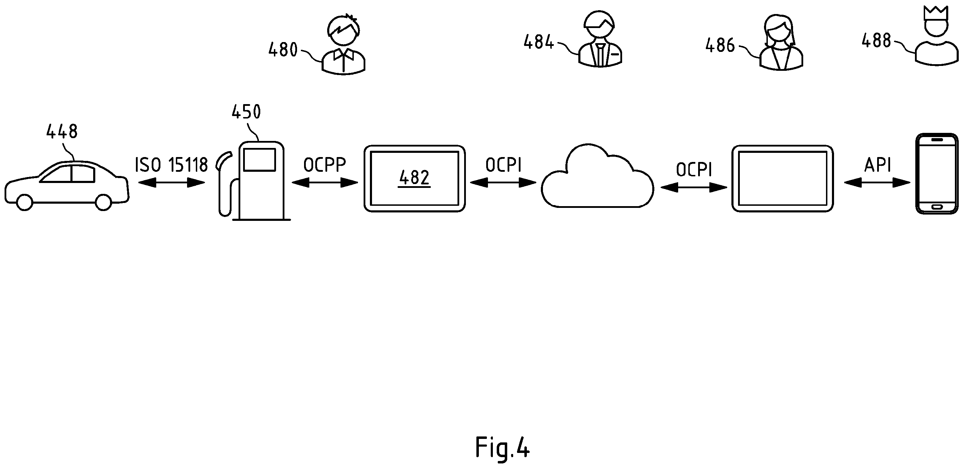

Ferner sind bei einem derartigen (öffentlichen) Laden von Fahrzeugen eine Vielzahl von separaten Systemen an dem Ladeprozess beteiligt. Die Kommunikation zwischen diesen Systemen erfolgt über standardisierte Protokolle. Ein derartiges System des Stands der Technik ist beispielhaft in der Figur 4 dargestellt.

Hierbei ist ISO 15118 ein Standard, der Festlegungen zur bidirektionalen Kommunikation, insbesondere über ein Ladekabel, zwischen einem Elektrofahrzeug 448 und einer Ladestation 450 enthält. OCPP (Open Charge-Point Protocol) ist das Open-Source-Standardprotokoll für die Kommunikation zwischen mehreren Ladestationen 450 und einem die Ladestationen 450 steuernden Charge-Point Managementsystem 482 bzw. Ladepunkt Managementsystem 482, das von einen Ladepunkt- bzw. Ladestationsbetreiber 480 betrieben werden kann. OCPI (Open Charge-Point Interface) ist ein offenes Protokoll, das für die Verbindung zwischen Ladepunkt Managementsystem 482 und Serviceanbietern (z.B. Roaming-Plattform Anbieter 484, E-Mobility Dienstleister 486 (EMP) etc.) verwendet wird. Über eine API kann eine Verbindung zu dem Nutzer 488 des Fahrzeugs 448 hergestellt werden.

Ein Fahrzeug mit einem elektrischen Speicher umfasst im Allgemeinen ein Ladesteuergerät, insbesondere in Form eines sogenannten Electric Vehicle Communication Controller (EVCC). Der EVCC fungiert insbesondere als Gateway zum gegenseitigen Austauschen von Ladedaten bzw. Ladeinformationen durch die Kommunikation zwischen einer Ladestation bzw. einer Ladesäule und der zentralen Steuereinheit des Elektrofahrzeugs, der Fahrzeug-ECU ("electronic control unit"). Insbesondere kann ein jeweiliger EVCC eine eindeutige Kennung in Form einer MAC-Adresse (EVCC-ID) haben, die bei einem Informationsaustausch zwischen dem Fahrzeug und der Ladestation über das Ladekabel übermittelt wird. Diese EVCC-ID ist für den Nutzer des Fahrzeugs nicht sichtbar und/oder ermittelbar. Die EVCC-ID ist im Stand der Technik insbesondere Bestandteil der Protokolle ISO 15118 sowie OCPP, nicht jedoch des OCPI-Protokolls. Insbesondere kann jedes Fahrzeug über eine Fahrzeugladekennung verfügen, die über das Ladekabel übertragbar ist. Die EVCC-ID kann beispielsweise als Fahrzeugladekennung herangezogen werden. Die Fahrzeugladekennung kann auch eine andere, möglichst eindeutige Kennung sein.

Bei einem derartigen System ist der Nutzerkomfort insbesondere bei der Bezahlung eines jeweilige Ladevorgangs eingeschränkt. So sind zum Autorisieren und Bezahlen eines Ladevorgangs aus dem Stand der Technik Ladekarten bekannt. Diese müssen an der Ladestation oder einer der Ladestation zugeordneten Schnittstelle eingelesen werden. Es erfolgt keine Authentifizierung, dass die Benutzung der Karte zum Bezahlen eines konkreten Ladevorgangs von dem Nutzer der Ladekarte freigegeben ist. Es besteht somit kein Missbrauchsschutz, wenn die Ladekarte nicht gesperrt wurde.

Einige, aber nicht alle, Fahrzeuge bzw. deren Ladesteuergeräte unterstützen das sogenannte Plug & Charge. Der Ladevorgang kann insbesondere direkt nach dem Herstellen der Verbindung zwischen der Ladestation und dem Fahrzeug über ein Ladekabel starten, ohne dass ein Zahlungsvorgang und/oder ein Vorautorisierungsvorgang (z.B. mit einer Ladekarte) vorgenommen werden muss. Dabei werden die Abrechnungsdaten an kompatiblen Ladestationen (z.B. Schnellladesäulen) über den Ladestecker des Ladekabels ausgetauscht. Sobald das Ladekabel eingesteckt bzw. verbunden wird, startet eine verschlüsselte Kommunikation nach dem ISO-15118-Standard zwischen dem Fahrzeug und der angeschlossenen Ladestation. Die Abrechnung selbst geschieht über einen entsprechenden Ladevertrag, der mit dem Fahrzeug verknüpft ist.

Auch wenn der Nutzerkomfort bei einem entsprechenden Ladevorgang gesteigert wird, ist dieser weiterhin noch nicht zufriedenstellend. Dies gilt umso mehr, wenn das Parksystem die Ladestation umfasst bzw. die Ladestation in der Parkvorrichtung angeordnet ist. Im Stand der Technik ist es erforderlich, den Parkvorgang und den Ladevorgang separat zu bezahlen. Dies reduziert den Nutzerkomfort. Zudem erhöht dies den Infrastrukturaufwand in einem Parksystem.

Daher liegt der Erfindung die Aufgabe zugrunde, eine Möglichkeit zu schaffen, mit der bei einem Parksystem mit mindestens einer Ladestation die Nachteile des Stands der Technik zumindest reduziert werden können und insbesondere der Nutzerkomfort gesteigert wird.

Die Aufgabe wird gemäß einem ersten Aspekt der Erfindung gelöst durch eine Datenverarbeitungsvorrichtung nach Anspruch 1 für ein Parksystem mit mindestens einer Ladestation. Die Datenverarbeitungsvorrichtung umfasst ein erstes Empfangsmodul. Das erste Empfangsmodul ist eingerichtet zum Empfangen eines ersten Kennzeichendatensatzes. Der erste Kennzeichendatensatz enthält zumindest ein durch mindestens eine Kamera des Parksystems erfasstes Fahrzeugkennzeichen eines durch eine Durchfahrt gefahrenen Fahrzeugs. Die Datenverarbeitungsvorrichtung umfasst ein zweites Empfangsmodul. Das zweite Empfangsmodul ist eingerichtet zum Empfangen eines Ladeanfragedatensatzes. Der Ladeanfragedatensatz enthält zumindest eine durch eine Ladestation über ein mit dem Fahrzeug verbundenes Ladekabel erfasste Fahrzeugladekennung. Die Datenverarbeitungsvorrichtung umfasst mindestens eine Datenbank. In der Datenbank ist eine Mehrzahl von Fahrzeugladedatensätzen gespeichert. Der jeweilige Fahrzeugladedatensatz enthält jeweils zumindest eine Fahrzeugladekennung und ein Fahrzeugkennzeichen eines jeweiligen Fahrzeugs. Die Datenverarbeitungsvorrichtung umfasst ein Zuordnungsmodul. Das Zuordnungsmodul ist eingerichtet zum Zuordnen der empfangenen Fahrzeugladekennung zu dem empfangenen ersten Kennzeichendatensatz, basierend auf den in der Datenbank gespeicherten Fahrzeugladedatensätzen. Die Datenverarbeitungsvorrichtung umfasst ein Freigabemodul. Das Freigabemodul ist eingerichtet zum automatischen Freigeben eines Ladevorgangs zum Laden des mit der Ladestation über das Ladekabel verbundene Fahrzeug nur bei einem Zuordnen der empfangenen Fahrzeugladekennung zu dem ersten Kennzeichendatensatz.

Indem im Gegensatz zum Stand der Technik erfindungsgemäß eine Datenbank bereitgestellt wird, in der Fahrzeugladedatensätze gespeichert sind, jeweils enthaltend zumindest ein Fahrzeugkennzeichen eines Fahrzeugs und eine Fahrzeugladekennung von diesem Fahrzeug, wird eine Verknüpfung von Parkvorgang und Ladevorgang eines Fahrzeugs ermöglicht. Die Nachteile des Stands der Technik werden zumindest reduziert und der Nutzerkomfort wird insbesondere gesteigert.

Eine gemeinsame Abrechnung von Parkvorgang und Ladevorgang eines Fahrzeugs wird ermöglicht, insbesondere in automatischer Weise.

Die Datenverarbeitungsvorrichtung kann aus einem oder mehreren Rechnern gebildet sein und mindestens einen Prozessor umfassen. Der mindestens eine Prozessor kann eingerichtet sein zum Ausführen von Softwaremodulen (z.B. Empfangsmodul, Zuordnungsmodul, Freigabemodul, Abrechnungsmodul etc.). Beispielsweise kann die Datenverarbeitungsvorrichtung durch mindestens einen lokalen Rechner, der an der Parkvorrichtung des Parksystems angeordnet ist, und/oder mindestens ein entfernt von der Parkvorrichtung angeordnetes Hintergrundsystem gebildet sein. Das Hintergrundsystem kann vorzugsweise aus einem oder mehreren (verteilt angeordneten) Rechner/n (z.B. Server/n) und/oder einem Cloudsystem gebildet sein.

Die Datenverarbeitungsvorrichtung dient dem Einsatz in einem Parksystem und kann insbesondere die Parksystemsteuerung bilden und/oder umfassen. Das Parksystem kann eine Parkvorrichtung zum Parken von Fahrzeugen bzw. Autos umfassen, wie einen Parkplatz, ein Parkhaus oder dergleichen. Eine Parkvorrichtung kann eine Mehrzahl von Stellplätzen umfassen. Das Parksystem verfügt vorzugsweise über mindestens eine Zufahrtsanordnung/en. Eine Zufahrtsanordnung umfasst eine oder mehrere Zufahrtsvorrichtung/en und mindestens eine Kamera.

Vorzugsweise kann als Zufahrtsvorrichtung eine Schranke mit mindestens einem an einer Säule bzw. einer Basis der Zufahrtsvorrichtung schwenkbar angeordneten Schrankenbaum vorgesehen sein. Es versteht sich, dass als Zufahrtsvorrichtung bzw. Sperrmittel in einer Zufahrtsanordnung aber auch ein Rolltor, Schwenktor, Sektionaltor, versenkbarer Poller und dgl. alternativ oder zusätzlich verwendet werden kann. Weiter kann die Zufahrtsvorrichtung auch ohne ein materielles Sperrmittel auskommen und beispielsweise ein Durchfahren einer Durchfahrt mittels eines Lichtsignals kontrollieren. Alternativ kann ein digitaler Trigger verwendet werden, der beispielsweise eine Funktion der Kamera des Parksystems darstellen kann.

Eine Zufahrtsvorrichtung kann insbesondere an einer Durchfahrt einer Parkvorrichtung bzw. des Parksystems angeordnet sein, wie einer Einfahrt und/oder Ausfahrt der Parkvorrichtung.

Vor einer Zufahrtsvorrichtung (in Durchfahrtsrichtung gesehen) ist in einem ersten Bereich insbesondere ein Zufahrtsabschnitt vorgesehen, den ein Fahrzeug, welches durch die Zufahrtsvorrichtung fahren wird, zuvor passieren muss. Mit der Zufahrtsvorrichtung wird an einer Durchfahrt ein Durchfahren dieser Durchfahrt durch die Zufahrtsvorrichtung von dem ersten Bereich in einen weiteren Bereich kontrolliert bzw. gesteuert. Mit anderen Worten kann beispielsweise ein Einfahren in die Parkvorrichtung durch eine Zufahrtsvorrichtung an einer Einfahrt gesteuert werden. Alternativ oder zusätzlich kann das Ausfahren aus der Parkvorrichtung durch eine Zufahrtsvorrichtung an einer Ausfahrt gesteuert werden. Es versteht sich dabei, dass eine Parkvorrichtung durchaus mehrere Einfahrten und/oder Ausfahrten aufweisen kann.

Wie bereits beschrieben wurde, kann eine Zufahrtsanordnung mindestens eine Kamera aufweisen. Die mindestens eine Kamera des Parksystems ist an der mindestens einen Durchfahrt insbesondere derart positioniert, dass ein Fahrzeugkennzeichen eines (jeden) Fahrzeugs, das die Durchfahrt durchfahren wird und/oder hat, durch den Erfassungsbereich der Kamera gelangt, so dass das Fahrzeugkennzeichen erfasst wird. Insbesondere erfasst die Kamera Bilder bzw. stellt Bilddaten bereit, die von einem Bildauswertemodul (beispielsweise implementiert in der Datenverarbeitungsvorrichtung) des Parksystems ausgewertet werden können, um das Fahrzeugkennzeichen zu bestimmen. Insbesondere kann mittels OCR eine automatische Fahrzeugkennzeichenbestimmung erfolgen.

Das erfasste Fahrzeugkennzeichen, insbesondere jedes erfasste Fahrzeugkennzeichen, kann einem ersten Empfangsmodul der Datenverarbeitungsvorrichtung bereitgestellt werden. Insbesondere wird ein erster Kennzeichendatensatz bereitgestellt. Der erste Kennzeichendatensatz enthält zumindest das Fahrzeugkennzeichen und vorzugsweise mindestens eine Zeitangabe. Die Zeitangabe (insbesondere ein Zeitstempel) kann den Erfassungszeitpunkt des Fahrzeugkennzeichens angeben, also insbesondere den Durchfahrtszeitpunkt des Fahrzeugs. Der erste Kennzeichendatensatz ist insbesondere ein Einfahrtsdatensatz, enthaltend das Fahrzeugkennzeichen eines durch die Durchfahrt in die Parkvorrichtung einfahrenden Fahrzeugs und insbesondere als Zeitangabe den Einfahrtszeitpunkt des Fahrzeugs.

Ein erstes Empfangsmodul der Datenverarbeitungsvorrichtung ist eingerichtet zum Empfangen von ersten Kennzeichendatensätzen insbesondere für ein Weiterverarbeiten dieser Kennzeichendatensätze.

Das erfindungsgemäße Parksystem umfasst mindestens eine Ladestation, insbesondere eine Mehrzahl von Ladestationen. Die mindestens eine Ladestation kann an einem Stellplatz der Parkvorrichtung angeordnet sein. Die mindestens eine Ladestation ist zumindest zum Abgeben elektrischer Energie eingerichtet, vorzugsweise zum bidirektionalen Austauschen von elektrischer Energie. Eine Ladestation bzw. eine Ladesäule kann über mindestens einen Ladepunkt verfügen, beispielsweise zwei Ladepunkte. Ein Ladepunkt kann insbesondere eine Abgabevorrichtung umfassen. Eine Abgabevorrichtung in Form eines Ladesteckers (samt Ladekabel) ist insbesondere eingerichtet zum Abgeben von Energie in Form von elektrischer Energie. Insbesondere kann ein Stromfluss von einem Ladepunkt über die Abgabevorrichtung zu einem Fahrzeug ermöglicht werden.

Jeder Ladepunkt einer Ladestation kann jeweils einen Abstellbereich in Form von Stellplätzen für zu ladende Fahrzeuge umfassen, insbesondere in Form von Elektrofahrzeugen. Ein Elektrofahrzeug (vorliegend kurz auch als Fahrzeug bezeichnet) kann über einen aufladbaren elektrischen Speicher insbesondere in Form einer Traktionsbatterie verfügen. Eine Ladestation kann einen Ladepunkt mit einer Abgabevorrichtung aufweisen, wie eine Ladesteckdose (z.B. gemäß EN 62196 Typ 2 oder dergleichen) und/oder ein festangeschlagenes Ladekabel mit einem Ladestecker (z.B. gemäß EN 62196 Typ 2 oder dergleichen).

Ein Ladevorgang umfasst vorliegend zumindest das Abgeben von elektrischer Energie. Insbesondere erfolgt während eines Ladevorgangs ein Energiefluss von dem Abgabepunkt zu einem Fahrzeug des Nutzers. Hierzu kann ein Nutzer die Ladestation mit dem Fahrzeug über ein Ladekabel koppeln bzw. verbinden. In bekannter Weise kann die während des Abgabevorgangs übertragene Energiemenge (durch einen entsprechenden Sensor bzw. Energiemengenzähler der Ladestation) erfasst bzw. gezählt werden. Aus dieser Energiemenge kann in ebenfalls bekannter Weise der für die Durchführung des Abgabevorgangs bzw. für den Bezug der gezählten Energiemenge zu entrichtende Betrag berechnet werden.

Zum Initiieren eines solchen Ladevorgangs empfängt die Ladestation von dem zu ladenden Fahrzeug (unmittelbar nach einem Anschließen des Ladekabels) eine Fahrzeugladekennung. Eine Fahrzeugladekennung ist insbesondere eine eineindeutige Kennung des Fahrzeugs. Mit anderen Worten, ein Fahrzeug kann eindeutig anhand der Fahrzeugladekennung identifiziert werden. Charakteristisch für eine erfindungsgemäße Fahrzeugladekennung ist, dass diese nur über ein Ladekabel übertragen wird und nicht im normalen Gebrauch des Fahrzeugs für einen Nutzer sichtbar und/oder ermittelbar ist. Sobald das Ladekabel eingesteckt bzw. verbunden wird, kann insbesondere eine verschlüsselte Kommunikation nach dem ISO-15118-Standard zwischen dem Fahrzeug und der angeschlossenen Ladestation starten und die Fahrzeugladekennung übertragen werden.

Gemäß einer besonders bevorzugten Ausführungsform der erfindungsgemäßen Datenverarbeitungsvorrichtung kann die Fahrzeugladekennung die EVCC (Electric Vehicle Communication Controller) -Kennung (bzw. ID) eines Ladesteuergeräts des Fahrzeugs sein. Grundsätzlich denkbar sind, insbesondere bei zukünftigen Anwendungen, auch andere eineindeutige Kennungen des Fahrzeugs, die über ein Ladekabel an die Ladestation übertragbar sind.

Die Ladestation stellt insbesondere einen Ladeanfragedatensatz, enthaltend zumindest die Fahrzeugladekennung, der Datenverarbeitungsvorrichtung zur Verfügung (beispielsweise über ein drahtloses und/oder drahtgebundenes Kommunikationsnetz). Ein Ladeanfragedatensatz kann vorzugsweise weitere Daten enthalten, wie eine Ladestationskennung der Ladestation, an die das Fahrzeug angeschlossen ist, ein Erfassungszeitdatum etc.

Ein zweites Empfangsmodul der Datenverarbeitungsvorrichtung ist eingerichtet zum Empfangen von Ladeanfragedatensätzen, insbesondere für ein Weiterverarbeiten der Ladeanfragedatensätze.

Erfindungsgemäß umfasst die Datenverarbeitungsvorrichtung eine Datenbank, in der eine Mehrzahl von Fahrzeugladedatensätzen gespeichert ist. Jeder Fahrzeugladedatensatz enthält zumindest ein Fahrzeugkennzeichen eines Fahrzeugs und eine Fahrzeugladekennung dieses Fahrzeugs.

Erfindungsgemäß umfasst die Datenverarbeitungsvorrichtung darüber hinaus ein Zuordnungsmodul. Insbesondere bei einem Empfangen einer Fahrzeugladekennung ordnet das Zuordnungsmodul diese Fahrzeugladekennung einem zuvor empfangenen Fahrzeugkennzeichen aus einer insbesondere Mehrzahl von zuvor empfangenen Fahrzeugkennzeichen zu, basierend auf den in der Datenbank gespeicherten Fahrzeugladedatensätzen.

Insbesondere kann das Zuordnungsmodul die empfangene Fahrzeugladekennung mit den in der Datenbank gespeicherten Fahrzeugladekennungen der Fahrzeugladedatensätze vergleichen. Insbesondere bei einem Feststellen, dass die empfangene Fahrzeugladekennung identisch ist mit einer gespeicherten Fahrzeugladekennung, kann das der gespeicherten und identischen Fahrzeugladekennung zugeordnete Fahrzeugkennzeichen bestimmt werden. Dann kann in einem weiteren Vergleichsschritt durch das Zuordnungsmodul festgestellt werden, ob das bestimmte Fahrzeugkennzeichen identisch ist mit einem zuvor empfangenen Fahrzeugkennzeichen. Wenn dies der Fall ist, ordnet das Zuordnungsmodul die empfangene Fahrzeugladekennung dem empfangenen ersten Kennzeichendatensatz bzw. dem entsprechenden Fahrzeugkennzeichen zu. Es versteht sich, dass die Vergleichsschritte auch zeitgleich oder in umgekehrter Reihenfolge ausgeführt werden können. Mit anderen Worten, ein Zuordnen der empfangenen Fahrzeugladekennung zu dem empfangenen ersten Kennzeichendatensatz, basierend auf den in der Datenbank gespeicherten Fahrzeugladedatensätze, umfasst insbesondere ein Feststellen, dass ein Fahrzeugladedatensatz gespeichert ist, der sowohl die empfangene Fahrzeugladekennung als auch das empfangene Fahrzeugkennzeichen enthält.

Erfindungsgemäß ist ferner ein Freigabemodul zum automatischen Freigeben eines Ladevorgangs zum Laden des mit der Ladestation über das Ladekabel verbundenen Fahrzeugs vorgesehen. Ein automatisches Freigeben erfolgt (aber) nur bei einem zuvor erfolgten Zuordnen der empfangenen Fahrzeugladekennung zu dem ersten Kennzeichendatensatz bzw. dem entsprechenden Fahrzeugkennzeichen. Ein automatisches Freigeben des Ladevorgangs meint vorliegend insbesondere, dass elektrische Energie, vorzugsweise ohne eine weitere Prüfung, Autorisierung etc., an das Fahrzeug bzw. die Traktionsbatterie (unmittelbar) übertragen werden kann und insbesondere übertragen wird. Mit anderen Worten, der Ladevorgang wird erfindungsgemäß insbesondere unmittelbar gestartet. Manuelle Interaktionen des Nutzers, wie die Nutzung einer Ladekarte oder Eingaben an der Ladestation, können entfallen.

Gemäß einer weiteren Ausführungsform der erfindungsgemäßen Datenverarbeitungsvorrichtung kann ein Fahrzeugladedatensatz mindestens ein weiteres Ladefahrzeugdatum enthalten. Das mindestens eine weitere Ladefahrzeugdatum kann ausgewählt sein aus der Gruppe, umfassend:
- eine Fahrzeugidentifikationsnummer (FIN bzw. engl. VIN),
- mindestens ein Zahlungsdatum (z.B. Kreditkarteninformation, Ladekarteninformation, Kontoinformation etc.),
- mindestens ein Kontaktdatum (z.B. E-Mailadresse, Telefonnummer etc.),
- mindestens ein Authentifizierungsdatum (z.B. PIN, Fingerabdruck, Sprachmuster, geräteinterner Authentifizierungsdienst (z.B. Passkeys...) etc.),
- ein Nutzername ((z.B. Person/ Firma), ggf. temporär) vergebene/r Alias/ID (z.B. in den Rollen: Halter, Fahrer, Rechnungsempfänger),
- mindestens ein Adressdatum (z.B. Rechnungsadresse),
- mindestens Loyaltydatum,
- mindestens ein Ladetechnikdatum (z.B. AC oder DC-Ladeangabe, bidirektionales Laden erlaubt oder nicht etc.),
- mindestens eine charakteristische Signalsignatur (z.B. Bluetooth-Signatur, WLAN-Signatur des Fahrzeugs, andere Signale von Fahrzeugkomponenten).

Die Fahrzeugidentifikationsnummer ist insbesondere eine eineindeutige Nummer, mit der ein Fahrzeug identifiziert werden kann. Vorzugsweise kann mindestens ein Zahlungsdatum in dem Fahrzeugladedatensatz vorhanden sein. Mittels des Zahlungsdatums kann insbesondere der Ladevorgang und/oder der Parkvorgang (automatisch) abgerechnet werden. Der Nutzerkomfort kann noch weiter verbessert werden. Ein Kontaktdatum dient insbesondere dazu, dem Nutzer Angaben über einen durchgeführten Ladevorgang und/oder Parkvorgang zur Verfügung zu stellen, wie beispielsweise eine Abrechnung über den durchgeführten Ladevorgang und/oder Parkvorgang.

Zur Erhöhung der Sicherheit kann mindestens ein Authentifizierungsdatum vorhanden sein, dass optional vor einem Freigeben des Ladevorgangs abgefragt werden kann, beispielsweise durch Senden einer entsprechenden Freigabeanfrage, zum Beispiel basierend auf dem Kontaktdatum. Auf einem (mobilen) Endgerät des Nutzers kann beispielsweise eine entsprechende Freigabeanfrage angezeigt werden. Automatisch oder veranlasst durch eine Nutzeraktion kann eine Freigabeantwort durch das Endgerät an die Datenverarbeitungsvorrichtung gesendet werden, enthaltend zumindest das angefragte Authentifizierungsdatum. Wenn durch die Datenverarbeitungsvorrichtung festgestellt wird, dass das empfangene Authentifizierungsdatum identisch ist mit dem gespeicherten Authentifizierungsdatum, kann eine Freigabe des Ladevorgangs erfolgen. Ansonsten kann eine Freigabe des Ladevorgangs blockiert werden und beispielsweise ein entsprechender Hinweis an das Endgerät versendet werden. Bei Varianten der Erfindung kann das Authentifizierungsdatum alternativ oder zusätzlich über eine Schnittstelle der Ladestation, an der sich das zu ladende Fahrzeug und damit der entsprechende Nutzer befindet, abgefragt werden.

Vorzugsweise zusätzlich zu dem mindestens einen (elektronischen) Kontaktdatum kann ein Nutzername und/oder eine Nutzeradresse gespeichert sein. Auch kann zusätzlich ein Loyaltydatum gespeichert sein. In dem Parksystem kann beispielsweise zur Unterstützung von einem Loyalty-Programm die Fahrzeugladekennung (insbesondere die EVCC-ID) mit einer Loyaltynummer bzw. einem Loyalityaccount verknüpft sein. Vorzugsweise jedes Mal, wenn das Fahrzeug lädt und die Fahrzeugladekennung des Fahrzeugs mittels der Ladestation detektiert wird, kann automatisch die Anzahl an Loyaltypunkten erhöht werden. Diese können je nach Loyalty-Programm als Stempelkarte, Paybay-Aktion etc. verwendet werden. Insbesondere kann die Datenbank der Datenverarbeitungsvorrichtung mit der Datenbank des Loyalty-Systems verknüpft sein oder eine gemeinsame Datenbank bilden. Es ist zudem denkbar, einen "fertigen Warenkorb" vor dem Abschluss des Zahlvorgangs an das Loyalty-Programm zu übermitteln, um ihn dann von diesem aktualisiert zurückzuerhalten, z.B. ergänzt um zu nutzende aktivierte Coupons etc. Damit ist nicht nur das Sammeln von Loyalty-Punkten, sondern auch die Nutzung von Loyalty-Punkten möglich. Indem insbesondere mindestens ein Ladetechnikdatum gespeichert ist, kann der Nutzer beim Laden unterstützt werden.

Gemäß einer weiteren Ausführungsform der erfindungsgemäßen Datenverarbeitungsvorrichtung kann die Datenverarbeitungsvorrichtung ferner ein drittes Empfangsmodul umfassen. Das dritte Empfangsmodul kann eingerichtet sein zumindest zum Empfangen eines Fahrzeugkennzeichens eines Fahrzeugs von einer Schnittstelle des Parksystems in Zusammenhang mit einem mit diesem Fahrzeug durchgeführten Initialladevorgang. Die Datenverarbeitungsvorrichtung kann ein Erzeugungsmodul umfassen. Das Erzeugungsmodul kann eingerichtet sein zum Erzeugen eines Fahrzeugladedatensatzes, enthaltend zumindest das empfangene Fahrzeugkennzeichen und die im Zusammenhang mit dem Initialladevorgang durch die Ladestation über ein Ladekabel erfasste Fahrzeugladekennung. Die Datenverarbeitungsvorrichtung kann ein Speichermodul umfassen. Das Speichermodul kann eingerichtet sein zum Speichern des erzeugten Fahrzeugladedatensatzes in der Datenbank.

Insbesondere kann erfindungsgemäß eine Registrierung des Fahrzeugs bzw. des Nutzers durchgeführt werden, um einen Fahrzeugladedatensatz zu erzeugen, der zumindest das Fahrzeugkennzeichen des Fahrzeugs und die Fahrzeugladekennung enthält. Insbesondere ist erkannt worden, dass eine entsprechende Registrierung vorteilhafterweise bei einem Initialladevorgang durchgeführt werden kann. Wie beschrieben wurde, ist die Fahrzeugladekennung derart eingerichtet und in einem Datenspeicher des Fahrzeugs, insbesondere des Ladesteuergeräts, gespeichert, das diese nicht durch den Nutzer (ohne spezielle technische Mittel) ermittelbar ist. Um dennoch eine Zuordnung zwischen einer Fahrzeugladekennung und einem Fahrzeugkennzeichen zu ermöglichen, wird gemäß einer bevorzugten Ausführungsform vorgeschlagen, die Fahrzeugladekennung und das Fahrzeugkennzeichen im Rahmen eines Initialladevorgangs miteinander zu verknüpfen. Ein Initialladevorgang meint hierbei insbesondere einen Ladevorgang eines Fahrzeugs an einer Ladestation des Parksystems, für das noch kein Fahrzeugladedatensatz in der Datenbank gespeichert ist. Insbesondere kann (unmittelbar, z.B. zwischen 0 und 10 Minuten) vor, während oder (unmittelbar, z.B. zwischen 0 und 10 Minuten) nach dem Durchführen des Ladevorgangs, bei dem die Fahrzeugladekennung durch die Ladestation detektiert und insbesondere der Datenverarbeitungsvorrichtung zur Verfügung gestellt wird, ein drittes Empfangsmodul, das über ein (drahtloses und/oder drahtgebundenes) Kommunikationsnetz mit einer Schnittstelle des Parksystems verbunden ist, zumindest das Fahrzeugkennzeichen des Fahrzeugs empfangen.

Die mindestens eine Schnittstelle des Parksystems kann ausgewählt sein aus der Gruppe, umfassend:
- Schnittstelle, insbesondere Nutzerschnittstelle (Tastatur, Fotoscanner, Touchdisplay etc.) oder Kartenleser (z.B. Loyaltycard, Zahlungsmittel etc.), der Ladestation,
- Schnittstelle, insbesondere Nutzerschnittstelle (Tastatur, Fotoscanner, Touchdisplay etc.) oder Kartenleser (z.B. Loyaltycard, Zahlungsmittel etc.), einer weiteren Vorrichtung des Parksystems, wie ein Payment Terminal, Automat, Powerpay, Türkartenleser, Self-Check-Out-Terminal etc.,
- eine Schnittstelle, insbesondere Nutzerschnittstelle (Tastatur, Fotoscanner, Touchdisplay etc.), eines mobilen Endgeräts (des Nutzers), auf dem beispielsweise eine Mobilitätsanwendung (z.B. eine Parkanwendung oder Ladeanwendung) in Form einer Softwareanwendung installiert ist und/oder auf dem eine Webseite des Parksystems aufrufbar ist,
- eine Schnittstelle, insbesondere Nutzerschnittstelle (Tastatur, Fotoscanner, Touchdisplay etc.), eines Auto Infotainment-Systems des Fahrzeugs des Nutzers,
- eine Schnittstelle, insbesondere Nutzerschnittstelle (Tastatur, Fotoscanner, Touchdisplay etc.), eines stationären Endgeräts (z.B. Desktoprechner), auf dem beispielsweise eine Webseite des Parksystems aufrufbar ist.

Insbesondere kann mindestens ein weiteres Ladefahrzeugdatum der vorbeschriebenen Fahrzeugladedaten durch das dritte Empfangsmodul über die mindestens eine Schnittstelle des Parksystems empfangen werden.

Beispielhafte und nicht abschließende mobile Endgeräte sind Smartphones, Tablet-Computer, mobile Spielkonsolen, Laptops, Netbooks, Datenbrillen, Smart-Watches und ähnliche Wearables. Alternativ kann ein mobiles Endgerät ein dediziertes Parkticketing-Gerät sein, das ausschließlich für eine Parkanwendung ausgelegt ist oder ein Bedienterminal (z.B. ein Touchdisplay oder eine ähnliche Schnittstelle der Ladestation), was ausschließlich zur Nutzung der mindestens einen Ladestation ausgelegt ist.

Vorzugsweise kann bei dem Zuordnen die Ladestationskennung der Ladestation, an der der Initialladevorgang durchgeführt werden soll, wird und/oder wurde bei der Zuordnung berücksichtigt werden. Beispielsweise kann die Fahrzeugladekennung zusammen mit der Ladestationskennung an die Datenverarbeitungsvorrichtung übertragen werden. Zudem kann durch die Schnittstelle die Ladestationskennung (automatisch oder nach einer Eingabe durch den Nutzer) zusammen mit dem Fahrzeugkennzeichen übertragen werden. Ein Verknüpfen der Fahrzeugladekennung und des Fahrzeugkennzeichens bzw. ein Erzeugen eines entsprechenden Fahrzeugladedatensatzes kann anhand der jeweils empfangenen Ladestationskennungen erfolgen. Vorzugsweise kann ein Zeitfenster vordefiniert sein, in dem sowohl Fahrzeugkennzeichen als auch Fahrzeugladekennung empfangen werden müssen. Ansonsten kann ein Verknüpfen unterbleiben.

Ein durch einen Prozessor der Datenverarbeitungsvorrichtung ausführbares Erzeugungsmodul ist insbesondere eingerichtet zum Erzeugen eines Fahrzeugladedatensatzes, basierend auf dem genannten Fahrzeugkennzeichen und der genannten Fahrzeugladekennung (und ggf. mindestens einem weiteren bereitgestellten Ladefahrzeugdatum). Der erzeugte Fahrzeugladedatensatz kann durch ein Speichermodul in der Datenbank gespeichert werden. In einfacher und gleichzeitig sicherer Weise können Fahrzeugladedatensätze generiert und gespeichert werden.

Bei Varianten der Erfindung kann ein Hilfsmedium für ein Erzeugen und Speichern eines Fahrzeugladedatensatzes verwendet werden. Insbesondere kann die im Kontext eines Initialladevorgangs empfangene Fahrzeugladekennung mit einem Hilfsmedium verknüpft werden. Beispielsweise kann auf einem Hilfsmedium in Form einer Quittung bzw. Rechnung (oder dergleichen) eines Ladevorgangs ein einmaliger (temporär gültiger) Code und insbesondere eine Websiteadresse abgebildet sein. Ein Nutzer kann ein Übermitteln zumindest des Fahrzeugkennzeichens und des genannten Codes an die Datenverarbeitungsvorrichtung bewirken, insbesondere unter Nutzung eines Endgeräts und der Websiteadresse. Der Code kann in der Datenverarbeitungsvorrichtung (temporär) zusammen mit der verknüpften Fahrzeugladekennung gespeichert sein. Bei einem Empfangen eines Codes samt Fahrzeugkennzeichen (und ggf. mindestens einem weiteren Ladefahrzeugdatum) kann nach einem gespeicherten Code gesucht werden, der identisch ist mit dem empfangenen Code. Wird ein gespeicherter identischer Code identifiziert, kann aus der mit diesem Code verknüpften Fahrzeugladekennung und des empfangenen Fahrzeugkennzeichens ein Fahrzeugladedatensatz erzeugt und gespeichert werden, wie beschrieben wurde. Bei einem digitalem Abruf einer Quittung über eine Landingpage kann hier auch die Abfrage weiterer Daten erfolgen.

Gemäß einer weiteren Ausführungsform kann ein Fahrzeugladedatensatz in einem Nutzerkonto gespeichert sein und/oder dieses bilden. Insbesondere kann ein Fahrzeugladedatensatz in Form eines Nutzerkontos, vorzugsweise mit Benutzername und Passwort, angelegt werden, sodass Nutzer darauf zugreifen und beispielsweise weitere Informationen hinterlegen und/oder anpassen kann. Alternativ kann der Fahrzeugladedatensatz nach dem Anlegen als Hintergrundservice existieren.

Gemäß einer weiteren Ausführungsform kann ein Fahrzeugladedatensatz zwei oder mehr Fahrzeugladekennungen einer entsprechenden Anzahl an Fahrzeugen und/oder zwei oder mehr Fahrzeugkennzeichen einer entsprechenden Anzahl an Fahrzeugen enthalten. So können beispielsweise einem Nutzerkonto mehrere Fahrzeuge zugeordnet sein, die beispielsweise regelmäßig von dem Nutzer gefahren werden. Darüber hinaus kann gemäß einer weiteren Ausführungsform der erfindungsgemäßen Datenverarbeitungsvorrichtung die Datenverarbeitungsvorrichtung ferner mindestens ein Abrechnungsmodul umfassen. Das mindestens eine Abrechnungsmodul kann eingerichtet sein zum Abrechnen des Parkvorgangs und des Ladevorgangs (bzw. eines Park-Ladevorgangs), zumindest basierend auf einer während eines abgeschlossenen Ladevorgangs abgegebenen Energieangabe und einer Parkdauerangabe. Insbesondere werden (in einer einzelnen Abrechnung) sowohl der Parkvorgang eines Fahrzeugs als auch der Ladevorgang desselben Fahrzeugs gemeinsam abgerechnet.

Die Parkdauerangabe kann insbesondere aus einem Einfahrtszeitpunkt und einem Ausfahrtszeitpunkt bestimmt werden. Der für den Parkvorgang zu entrichtende Betrag kann insbesondere ermittelt werden, abhängig von mindestens einer Parktarifangabe und der bestimmten Parkdauerangabe. Der für den Ladevorgang zu entrichtende Betrag kann insbesondere ermittelt werden, abhängig von mindestens einer Ladetarifangabe und der bereitgestellten und insbesondere zuvor gemessenen Energieangabe. Das Abrechnungsmodul kann die genannten Beträge kombinieren (z.B. nach einer vorgegebenen Kombinationsregel) und insbesondere gemeinsam abrechnen.

Gemäß einer bevorzugten Ausführungsform der erfindungsgemäßen Datenverarbeitungsvorrichtung kann das erste Empfangsmodul eingerichtet sein zum Empfangen eines zweiten Kennzeichendatensatzes, enthaltend zumindest das durch mindestens eine Kamera des Parksystems erfasste Fahrzeugkennzeichen eines durch eine Durchfahrt des Parksystems nach einem abgeschlossenen Ladevorgang gefahrenen Fahrzeugs. Insbesondere kann der erste Kennzeichendatensatz ein vorbeschriebener Einfahrtdatensatz sein und der zweite Kennzeichendatensatz ein vorbeschriebener Ausfahrtdatensatz. Insbesondere kann ein Einfahrtdatensatz einem Ausfahrtdatensatz anhand des jeweils enthaltenden identischen Fahrzeugkennzeichens zugeordnet werden. Anhand des Einfahrtdatensatzes und des Ausfahrtdatensatzes kann die Parkdauerangabe bestimmt werden.

Das zweite Empfangsmodul kann eingerichtet sein zum Empfangen der während des abgeschlossenen Ladevorgangs abgegebenen Energieangabe von der Ladestation. Wie bereits beschrieben wurde, kann eine Ladestation einen Energiemengenzähler umfassen, eingerichtet zum Messen der ausgetauschten Energiemenge. Die gemessene Energiemenge kann das zweite Empfangsmodul, insbesondere zusammen mit der Fahrzeugladekennung, als Energieangabe von der Ladestation empfangen. Wie zuvor beschrieben wurde, kann dann das Abrechnungsmodul eingerichtet sein zum gemeinsamen Abrechnen des Park-Ladevorgangs.

Gemäß einer besonders bevorzugten Ausführungsform der erfindungsgemäßen Datenverarbeitungsvorrichtung kann die Datenverarbeitungsvorrichtung ein viertes Empfangsmodul umfassen. Das vierte Empfangsmodul kann eingerichtet sein zum Empfangen einer Ladestationsreservierungsanfrage, enthaltend zumindest ein Fahrzeugkennzeichen des zu ladenden Fahrzeugs und eine Reservierungszeitangabe. Die Reservierungszeitangabe meint insbesondere eine in der Zukunft gelegene Zeitdauer, während der das Fahrzeug mit dem Fahrzeugkennzeichen der Ladestationsreservierungsanfrage geladen werden soll.

Die Datenverarbeitungsvorrichtung kann ein Ladestationsreservierungsmodul umfassen. Das Ladestationsreservierungsmodul kann eingerichtet sein zum Bestimmen einer dem erhaltenen Fahrzeugkennzeichen zugeordneten Fahrzeugladekennung, basierend auf den in der Datenbank gespeicherten Fahrzeugladedatensätzen. Insbesondere kann die empfangene Ladestationsreservierungsanfrage dem Ladestationsreservierungsmodul zur Verfügung gestellt werden. Dann kann die Datenbank durch das Ladestationsreservierungsmodul nach einem gespeicherten Fahrzeugkennzeichen durchsucht werden, das zu dem empfangenen Fahrzeugkennzeichen identisch ist. Wenn das Ladestationsreservierungsmodul ein gespeichertes und identisches Fahrzeugkennzeichen identifiziert, bestimmt es insbesondere die zugeordnete Fahrzeugladekennung.

Das Ladestationsreservierungsmodul kann eingerichtet sein zum Reservieren einer Ladestation (insbesondere einer Mehrzahl von Ladestationen) des Parksystems, derart, dass abhängig von der Reservierungszeitangabe ein Ladevorgang an der Ladestation nur bei einem Empfangen der bestimmten Fahrzeugladekennung freigegeben wird. Beispielsweise kann die Datenverarbeitungsvorrichtung eine Ladereservierungsdatenbank umfassen, in denen Ladereservierungsdatensätze gespeichert sein können. Ein Ladereservierungsdatensatz kann insbesondere, das Fahrzeugkennzeichen des zu ladenden Fahrzeugs, die bestimmte Fahrzeugladekennung und die Reservierungszeitangabe enthalten. Optional kann ein Ladereservierungsdatensatz eine Ladestationskennung einer definierten reservierten Ladestation und/oder ein Ladetechnikdatum enthalten. Beispielsweise kann ein Reservieren einer Ladestation das Reservieren einer definierten Ladestation aus einer Mehrzahl von Ladestationen umfassen. In diesem Fall kann der Ladereservierungsdatensatz die Ladestationskennung dieser definierten Ladestation enthalten. Ein Laden an dieser definierten Ladestation ist während der Reservierungszeitangabe nur mit dem Fahrzeug möglich, dessen Fahrzeugladekennung in diesem Ladereservierungsdatensatz enthalten ist.

Alternativ oder zusätzlich kann bei Erhalt einer Ladestationsreservierungsanfrage eine beliebige Ladestation aus der Mehrzahl von Ladestationen reserviert werden, derart, dass sichergestellt wird, dass das Fahrzeug, dessen Fahrzeugladekennung in diesem Ladereservierungsdatensatz enthalten ist, an einer beliebigen freien Ladestation während der Reservierungszeitangabe geladen werden kann. Insbesondere kann das Ladestationsreservierungsmodul abhängig von der augenblicklichen Belegung und den gespeicherten Ladereservierungsdatensätzen bzw. den entsprechenden Reservierungszeitangaben die Ladestationen derart steuern, dass die Anzahl an freien Ladestationen während eines definierten (zukünftigen) Zeitraums größer oder gleich der Anzahl an Ladereservierungsdatensätzen (von noch nicht an einer Ladestation des Parksystems angeschlossenen Fahrzeugen) mit Reservierungszeitangaben ist, die in diesem definierten Zeitraum liegen. Mit anderen Worten, bei dieser Reservierungsvariante (auch als dynamische Reservierungsvariante bezeichnet) kann eine Kapazität freigehalten werden, die von den gespeicherten Ladereservierungsdatensätze abhängen kann. Die Zuordnung zwischen Ladestation und Fahrzeug kann erst erfolgen, wenn das Fahrzeug an eine freie bzw. verfügbare Ladestation angeschlossen wird. Insbesondere wird in dem Fall durch das Ladestationsreservierungsmodul sichergestellt, dass für die gespeicherten Ladereservierungsdatensätze eine entsprechende Anzahl an beliebigen Ladestationen (ggf. kann die Ladetechnik anhand des gespeicherten Ladetechnikdatums berücksichtigt werden) und nicht definierte Ladestationen zur Verfügung steht. So kann ein Nutzer an eine beliebige freie Ladestation fahren.

Bei einem Empfangen einer Ladestationsreservierungsanfrage kann das Ladestationsreservierungsmodul eingerichtet sein zum Prüfen, ob für die angefragte Reservierungszeitangabe mindestens eine Ladestation des Parksystems frei ist bzw. noch nicht reserviert ist, basierend auf den gespeicherten

Ladereservierungsdatensätzen. Wenn keine freie Ladestation für die angefragte Reservierungszeitangabe identifiziert werden kann, kann als Antwort eine entsprechende Mitteilung an den Sender versendet werden (beispielsweise mit einem alternativen Reservierungsvorschlag). Wenn eine freie Ladestation für die angefragte Reservierungszeitangabe durch das Ladestationsreservierungsmodul identifiziert werden kann, kann das Ladestationsreservierungsmodul einen (neuen) Ladereservierungsdatensatz erzeugen, enthaltend, das Fahrzeugkennzeichen des zu ladenden Fahrzeugs, die bestimmte Fahrzeugladekennung und die Reservierungszeitangabe. Optional kann der Ladereservierungsdatensatz die Ladestationskennung der reservierten Ladestation und/oder ein Ladetechnikdatum enthalten. Das Ladetechnikdatum gibt insbesondere an, welche Ladetechnik zum Laden des in dem Ladereservierungsdatensatz genannten Fahrzeugs erforderlich ist. Zudem kann insbesondere eine Bestätigung als Antwort auf die Reservierungsanfrage an den Sender versendet werden.

Eine Ladestation, vorzugsweise jede Ladestation, kann mindestens eine ansteuerbare (optische) Anzeige (beispielsweise mindestens ein Leuchtmodul, ein Display, ein Lautsprecher und/oder dergleichen) umfassen. Eine Ladestationssteuerung des Parksystems kann die mindestens eine Anzeige ansteuern, basierend auf den gespeicherten Ladereservierungsdatensätzen. Insbesondere kann hierdurch für Nutzer kenntlich gemacht werden, ob eine Ladestation reserviert ist (beispielsweise durch ein Signallicht einer bestimmten Farbe (z.B. rot)) oder nicht (beispielsweise durch ein Signallicht einer bestimmten Farbe (z.B. grün)).

Ferner kann insbesondere vorgesehen sein, dass vor einer Freigabe des Ladevorgangs an einer (reservierten) Ladestation zunächst durch das Freigabemodul geprüft wird, ob die Ladestation, an der das Fahrzeug über ein Ladekabel angeschlossen wird/ist, ein Ladereservierungsdatensatz vorhanden ist, indem insbesondere durch das Freigabemodul bestimmt wird, ob die empfangene Fahrzeugladekennung mit einer in einem Ladereservierungsdatensatz gespeicherten Fahrzeugladekennung identisch ist. Wenn das Freigabemodul feststellt, dass für diese Ladestation kein Ladereservierungsdatensatz mit der empfangenen Fahrzeugladekennung vorliegt, bewirkt das Freigabemodul ein Blockieren des Ladevorgangs. Mit anderen Worten, das angeschlossene Fahrzeug wird nicht geladen. Optional kann ein entsprechender Hinweis angezeigt und/oder versendet werden. Nur wenn festgestellt wird, dass für diese Ladestation ein Ladereservierungsdatensatz mit der empfangenen Fahrzeugladekennung (und insbesondere entsprechend der gespeicherten Reservierungszeitangabe) vorliegt, bewirkt das Freigabemodul ein automatisches Freigeben des Ladevorgangs. Insbesondere kann hierdurch das Risiko reduziert werden, dass eine reservierte Ladestation durch ein Fahrzeug, das nicht zum Laden an dieser Ladestation berechtigt ist, blockiert wird.

Alternativ oder zusätzlich kann vorgesehen sein, dass das Ladestationsreservierungsmodul eingerichtet ist zum Reservieren einer beliebigen Ladestation des Parksystems einer Mehrzahl von Ladestationen des Parksystems, derart, dass abhängig von der Reservierungszeitangabe zumindest eine Ladestation der Mehrzahl von Ladestationen des Parksystems für einen Ladevorgang nur bei einem Empfangen der bestimmten Fahrzeugladekennung freigegeben wird. Vorzugsweise kann vor einer Freigabe des Ladevorgangs an einer Ladestation zunächst durch das Freigabemodul geprüft werden, ob die Anzahl an freien Ladestationen während eines definierten (zukünftigen) Zeitraums größer oder gleich der Anzahl an Ladereservierungsdatensätzen (von noch nicht an einer Ladestation des Parksystems angeschlossenen Fahrzeugen) mit Reservierungszeitangaben ist, die in diesem definierten Zeitraum liegen. Insbesondere dann, wenn die Anzahl größer ist, kann ein Ladevorgang an dieser Ladestation in vorbeschriebener Weise durchgeführt werden. Zusätzlich kann geprüft werden, ob die Fahrzeugladekennung identisch ist mit einer in einem Ladereservierungsdatensatz enthaltenen Fahrzeugladekennung. Wenn dies der Fall ist, kann insbesondere die Anzahl an

Ladereservierungsdatensätzen von noch nicht an einer Ladestation des Parksystems angeschlossenen Fahrzeugen um -eins reduziert werden. Wenn dies nicht der Fall ist, kann die Anzahl an freien Ladestationen während eines definierten (zukünftigen) Zeitraums um eins reduziert werden. Insbesondere dann, wenn die Anzahl an freien Ladestationen während eines definierten (zukünftigen) Zeitraums gleich der Anzahl an Ladereservierungsdatensätzen von noch nicht an einer Ladestation des Parksystems angeschlossenen Fahrzeugen mit Reservierungszeitangaben ist, kann vor einer Freigabe des Ladevorgangs zunächst durch das Freigabemodul geprüft werden, ob ein Ladereservierungsdatensatz vorhanden ist, in dem eine Fahrzeugladekennung enthalten ist, die identisch ist mit der empfangenen Fahrzeugladekennung. Wenn das Freigabemodul feststellt, dass kein entsprechender Ladereservierungsdatensatz vorhanden ist, bewirkt das Freigabemodul ein Blockieren des Ladevorgangs. Mit anderen Worten, das angeschlossene Fahrzeug wird nicht geladen. Optional kann ein entsprechender Hinweis angezeigt und/oder versendet werden. Nur wenn festgestellt wird, dass ein Ladereservierungsdatensatz vorhanden ist, in dem eine Fahrzeugladekennung enthalten ist, die mit der empfangenen Fahrzeugladekennung (und insbesondere entsprechend der gespeicherten Reservierungszeitangabe) identisch ist, bewirkt das Freigabemodul ein automatisches Freigeben des Ladevorgangs. Insbesondere kann hierdurch das Risiko reduziert werden, dass eine reservierte Ladestation durch ein Fahrzeug, das nicht zum Laden an dieser Ladestation berechtigt ist, blockiert wird.

Es versteht sich, dass das beschriebene erste Empfangsmodul, das zweite Empfangsmodul, das dritte Empfangsmodul und/oder das vierte Empfangsmodul durch eine (oder zwei oder drei) gemeinsame Empfangseinrichtung(en) oder durch separate Module gebildet sein kann.

Gemäß einer weiteren Ausführungsform der erfindungsgemäßen Datenverarbeitungsvorrichtung kann die Datenverarbeitungsvorrichtung ferner ein Speichermodul umfassen. Das Speichermodul kann eingerichtet sein zum Speichern eines Ladereservierungsdatensatzes, enthaltend zumindest das Fahrzeugkennzeichen des zu ladenden Fahrzeugs, vorzugsweise die bestimmte Fahrzeugladekennung und insbesondere eine Reservierungszeitangabe. Optional kann eine Ladestationskennung enthalten sein. Vorzugsweise kann ein zuvor beschriebener Ladereservierungsdatensatz erzeugt und gespeichert werden, insbesondere in der genannten Datenbank.

Die Datenverarbeitungsvorrichtung kann vorzugsweise ein Routingmodul umfassen. Das Routingmodul kann eingerichtet sein zum Ansteuern mindestens eines Fahrzeugleitmoduls (des Parksystems) bei einem Empfangen des in dem Ladereservierungsdatensatzes enthaltenden Fahrzeugkennzeichens durch das erste Empfangsmodul, derart, dass das durch die Durchfahrt gefahrene Fahrzeug zu der reservierten Ladestation bzw. einer freien Ladestation bzw. einem Bereich mit mindestens einer freien Ladestation geleitet wird, ggf. basierend auf der in dem Ladereservierungsdatensatz enthaltenen Ladestationskennung. Das mindestens eine Fahrzeugleitmodul kann beispielsweise mindestens eine (optische) Anzeige des Parksystems sein, eingerichtet zum Anzeigen von Routingangaben (beispielsweise Pfeilsymbole und/oder Text), die den Nutzer des Fahrzeugs zu der reservierten Ladestation leiten.

Bei alternativen oder zusätzlichen Varianten der Erfindung kann das Routingmodul eingerichtet sein zum Ansteuern eines Fahrzeugleitmoduls in Form eines Endgeräts, das dem Nutzer zugeordnet ist (z.B. mobiles Endgerät des Nutzers, Auto Infotainment-Systems des Fahrzeugs des Nutzers etc.). Insbesondere kann in dem Fahrzeugladedatensatz ein entsprechendes Kontaktdatum gespeichert sein. Das Routingmodul kann insbesondere auf den Fahrzeugladedatensatz zugreifen und/oder das Kontaktdatum kann in dem Ladereservierungsdatensatz enthalten sein. Das Routingmodul kann insbesondere zum Ansteuern einen Instruktionsdatensatz aussenden, der Instruktionen enthält, die, wenn sie durch einen Prozessor des Endgeräts ausgeführt werden, dieses (z.B. unter Steuerung einer darauf installierten Parkanwendung) veranlassen, Routingangaben (beispielsweise Pfeilsymbole und/oder Text und/oder akustische Informationen etc.) auszugeben, die den Nutzer des Fahrzeugs zu der reservierten Ladestation leiten.

Bei alternativen oder zusätzlichen Varianten der Erfindung kann das Routingmodul eingerichtet sein zum Ansteuern eines Fahrzeugleitmoduls bei einem Empfangen eines Fahrzeugkennzeichens durch das erste Empfangsmodul und dem Vorhandensein eines Fahrzeugladedatensatzes zu dem empfangenen Fahrzeugkennzeichen, derart, dass das durch die Durchfahrt gefahrene Fahrzeug zu einer freien Ladestation bzw. einem Bereich mit mehreren freien Ladestationen geleitet wird.

Bei einer weiteren Ausführungsform kann vorgesehen sein, dass bei einem Diebstahl eines Fahrzeugs das Fahrzeug als gestohlen in der genannten Datenbank gekennzeichnet werden kann, beispielsweise nach einer entsprechenden Mitteilung des Nutzers des gestohlenen Fahrzeugs. Wird das Fahrzeug an einer Ladestation des Parksystems angeschlossen und die Fahrzeugladekennung übertragen, kann insbesondere vorgesehen sein, dass eine Information über den Standort des Fahrzeugs an ein Kontaktdatum des Nutzers versendet wird (z.B. E-Mail, SMS etc.).

Wie bereits beschrieben wurde, kann eine Ladestation des Parksystems zum bidirektionalen Austausch von elektrischer Energie bzw. Leistung eingerichtet sein. Bei einem Anschließen des Fahrzeugs kann nach dem oben beschriebenen üblichen Verfahren ermittelt werden, ob Informationen zum bidirektionalen Laden hinterlegt wurden. Dies kann z.B. in dem Fahrzeugladedatensatz gespeichert sein. Beispielsweise kann gespeichert sein, unter welchen Bedingungen (z.B. Mindestvergütung für Wiedereinspeisung, bestimmter Zeitraum, minimal erlaubter Ladezustand der Traktionsbatterie etc.) das bidirektionale Laden erfolgen kann.

Ein weiterer Aspekt der Erfindung ist ein Verfahren, insbesondere ein computerimplementiertes Verfahren, das insbesondere von einer zuvor beschriebenen Datenverarbeitungsvorrichtung ausführbar ist. Das Verfahren umfasst:
- Empfangen eines ersten Kennzeichendatensatzes, enthaltend zumindest ein durch mindestens eine Kamera des Parksystems erfasstes Fahrzeugkennzeichen eines durch eine Durchfahrt gefahrenen Fahrzeugs,
- Empfangen eines Ladeanfragedatensatzes, enthaltend zumindest eine durch eine Ladestation über ein mit dem Fahrzeug verbundenes Ladekabel erfasste Fahrzeugladekennung,
- wobei eine Mehrzahl von Fahrzeugladedatensätzen in einer Datenbank gespeichert ist, enthaltend jeweils zumindest eine Fahrzeugladekennung und ein Fahrzeugkennzeichen eines jeweiligen Fahrzeugs,
- Zuordnen der empfangenen Fahrzeugladekennung zu dem empfangenen ersten Kennzeichendatensatz, basierend auf den gespeicherten Fahrzeugladedatensätzen, und
- automatisches Freigeben eines Ladevorgangs zum Laden des mit der Ladestation über das Ladekabel verbundenen Fahrzeugs nur bei einem Zuordnen der empfangenen Fahrzeugladekennung zu dem ersten Kennzeichendatensatz.

Ein weiterer Aspekt der Erfindung ist ein Computerprogramm, umfassend Befehle, die bei der Ausführung des Computerprogramms durch mindestens einen Prozessor einer (zuvor beschriebenen) Datenverarbeitungsvorrichtung diesen veranlassen, das zuvor beschriebene Verfahren auszuführen und/oder zu steuern.

Das Computerprogramm, insbesondere die Instruktionen bzw.

Programmanweisungen, können in einem Computerprogrammprodukt gespeichert sein, insbesondere einem Programmspeicher. Zum Beispiel ist ein Programmspeicher ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Zusätzlich kann eine Datenverarbeitungsvorrichtung einen Hauptspeicher aufweisen, zum Beispiel einen flüchtigen oder nicht-flüchtigen Speicher, insbesondere einen Speicher mit wahlfreiem-Zugriff (RAM), wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM). Der mindestens eine Prozessor der Datenverarbeitungsvorrichtung kann beispielsweise Zwischenergebnisse oder Ähnliches in dem Hauptspeicher speichern.

Ein noch weiterer Aspekt der Erfindung ist ein Parksystem, insbesondere ein zuvor beschriebenes Parksystem. Das Parksystem umfasst mindestens eine an einer Durchfahrt (des Parksystems) angeordnete Kamera. Die mindestens eine Kamera ist eingerichtet zum Erfassen eines Fahrzeugkennzeichens eines durch die Durchfahrt fahrenden Fahrzeugs. Das Parksystem umfasst mindestens eine Ladestation. Die mindestens eine Ladestation ist eingerichtet zum Empfangen einer Fahrzeugladekennung über ein mit dem Fahrzeug und der Ladestation verbundenes Ladekabel. Das Parksystem umfasst eine zuvor beschriebene Datenverarbeitungsvorrichtung.

Die zuvor beschriebenen Module sind vorzugsweise zumindest teilweise Softwareelemente (z.B. ausführbarer Code) und können von einem Prozessor der Datenverarbeitungsvorrichtung ausgeführt werden. Es sei ferner angemerkt, dass Begriffe, wie "erste"; "zweite" etc. nicht eine Reihenfolge angeben, sondern insbesondere zur Unterscheidung zweier Elemente (z.B. Empfangsmodul, Bereich etc.) dienen.

Die Merkmale der Datenverarbeitungsvorrichtungen, Parksysteme, Verfahren und Computerprogramme sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die erfindungsgemäße Datenverarbeitungsvorrichtung, das erfindungsgemäße Verfahren, das erfindungsgemäße Computerprogramm und das erfindungsgemäße Parksystem auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels einer Datenverarbeitungsvorrichtung gemäß der Erfindung,
- Fig. 2: eine schematische Ansicht eines Ausführungsbeispiels eines Parksystems gemäß der Erfindung mit einem Ausführungsbeispiel einer Datenverarbeitungsvorrichtung gemäß der Erfindung, und
- Fig. 3: ein Diagramm eines Ausführungsbeispiels eines Verfahrens gemäß der Erfindung, und
- Fig. 4: ein System zum Laden von Fahrzeugen gemäß dem Stand der Technik.

Nachfolgend werden für gleiche Elemente gleiche Bezugszeichen verwendet.

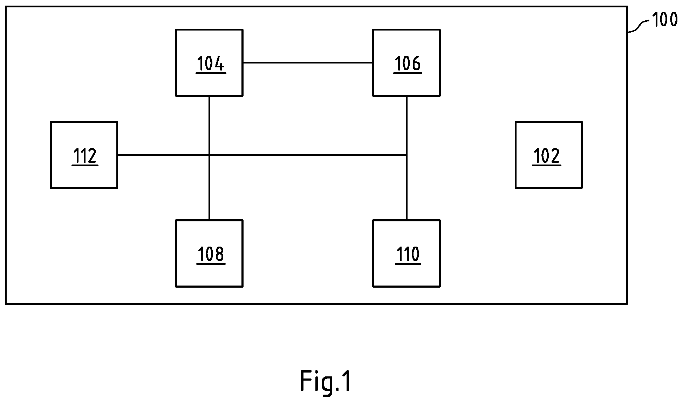

Die Figur 1 zeigt eine schematische Ansicht eines Ausführungsbeispiels einer Datenverarbeitungsvorrichtung 100 für ein Parksystem gemäß der Erfindung. Die Datenverarbeitungsvorrichtung 100 ist insbesondere Bestandteil des Parksystems und dient dem Betreiben bzw. Steuern des Parksystems. Die

Datenverarbeitungsvorrichtung 100 kann beispielsweise durch einen lokalen Rechner, der an der Parkvorrichtung des Parksystems angeordnet ist, und/oder einem entfernt von der Parkvorrichtung angeordneten Hintergrundsystem des Parksystems gebildet sein.

Die Datenverarbeitungsvorrichtung 100 kann mindestens einen Prozessor 102 umfassen, eingerichtet zum Ausführen von Softwaremodulen 104, 106, 108, 110 der Datenverarbeitungsvorrichtung 100. Es versteht sich, dass die Datenverarbeitungsvorrichtung 100 weitere Hardwareelemente, wie Speichermittel etc., umfassen kann.

Ein erstes Empfangsmodul 104 der Datenverarbeitungsvorrichtung ist eingerichtet zum Empfangen eines ersten Kennzeichendatensatzes, enthaltend zumindest ein durch mindestens eine Kamera des Parksystems erfasstes Fahrzeugkennzeichen eines durch eine Durchfahrt gefahrenen Fahrzeugs. Es versteht sich, dass das Fahrzeugkennzeichen des Fahrzeugs vor, während und/oder nach einem Durchfahren der Durchfahrt durch die mindestens eine Kamera erfasst werden kann. Insbesondere wird jedes Fahrzeugkennzeichen eines jeden Fahrzeugs, das durch die Durchfahrt fährt, durch die mindestens eine Kamera erfasst und dem ersten Empfangsmodul 104 bereitgestellt.

Ferner ist ein zweites Empfangsmodul 106 in der Datenverarbeitungsvorrichtung 100 vorgesehen, eingerichtet zum Empfangen eines Ladeanfragedatensatzes, enthaltend zumindest eine durch eine Ladestation des Parksystems über ein mit dem Fahrzeug verbundenes Ladekabel erfasste Fahrzeugladekennung.

Darüber hinaus umfasst die Datenverarbeitungsvorrichtung 100 mindestens eine Datenbank 112, in der eine Mehrzahl von Fahrzeugladedatensätzen gespeichert ist. Jeder Fahrzeugladedatensatz enthält zumindest eine Fahrzeugladekennung und ein Fahrzeugkennzeichen eines jeweiligen (registrierten) Fahrzeugs. Wie beschrieben wurde, kann mindestens ein weiteres Ladefahrzeugdatum in einem jeweiligen Fahrzeugladedatensatz enthalten sein.

Die mindestens eine empfangene Fahrzeugladekennung und das mindestens eine Fahrzeugkennzeichen können einem Zuordnungsmodul 108 der Datenverarbeitungsvorrichtung 100 bereitgestellt werden. Das Zuordnungsmodul 108 ist insbesondere eingerichtet zum Zugreifen auf die Datenbank 112. Das Zuordnungsmodul 108 ist eingerichtet zum Zuordnen der empfangenen Fahrzeugladekennung zu dem empfangenen ersten Kennzeichendatensatz, basierend auf den in der Datenbank 112 gespeicherten Fahrzeugladedatensätzen. Insbesondere kann das Zuordnungsmodul 108 beim Zuordnen eingerichtet sein zum Prüfen, ob ein Fahrzeugladedatensatz in der Datenbank 112 gespeichert ist, der sowohl die empfangene Fahrzeugladekennung als auch das mindestens eine Fahrzeugkennzeichen enthält. Durch ein Feststellen, dass ein Fahrzeugladedatensatz in der Datenbank 112 gespeichert ist, in dem das empfangene Fahrzeugkennzeichen und die empfangene Fahrzeugladekennung enthalten sind, erfolgt ein Zuordnen der empfangenen Fahrzeugladekennung zu dem empfangenen ersten Kennzeichendatensatz.

Darüber hinaus umfasst die Datenverarbeitungsvorrichtung 100 ein Freigabemodul 110. Das Freigabemodul 110 ist eingerichtet zum automatischen Freigeben eines Ladevorgangs zum Laden des mit der Ladestation über das Ladekabel verbundenen Fahrzeugs nur dann, wenn ein Zuordnen der empfangenen Fahrzeugladekennung zu dem ersten Kennzeichendatensatz erfolgen konnte. Insbesondere kann das Zuordnungsmodul 108 nach einem vorbeschriebenen Zuordnen das Freigabemodul 110 entsprechend ansteuern und/oder das Freigabemodul 110 kann in dem Zuordnungsmodul 108 integriert sein. Wenn kein Zuordnen erfolgen kann, also kein entsprechender Fahrzeugladedatensatz identifiziert werden kann, kann ein Ausführen des Ladevorgangs (zumindest zunächst) blockiert werden. Insbesondere kann es dann erforderlich sein, dass der Nutzer den Ladevorgang an der Ladestation in herkömmlicher Weise initiieren muss, also beispielsweise mittels einer zuvor beschrieben Ladekarte.

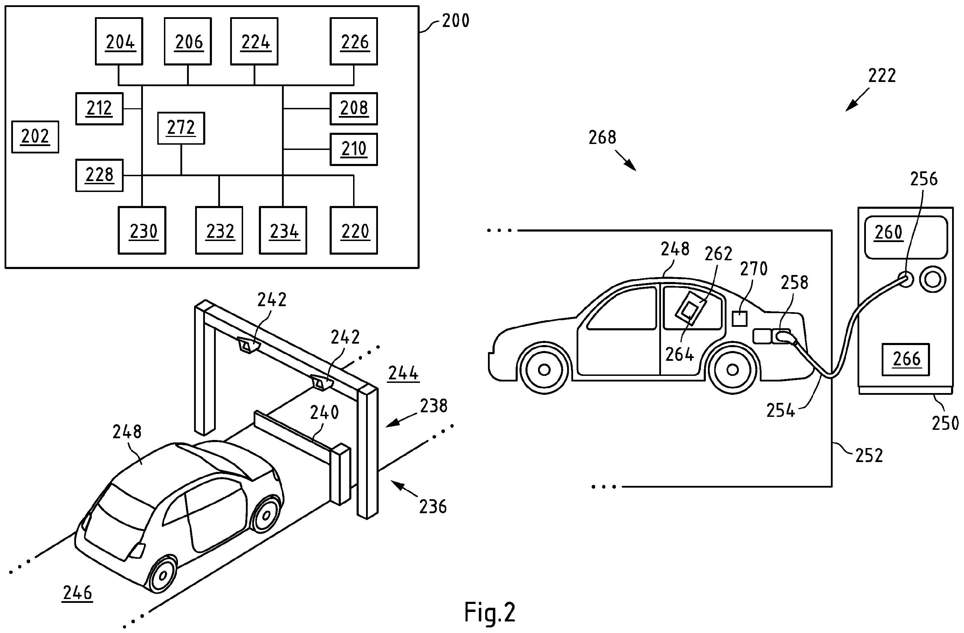

Die Figur 2 zeigt eine schematische Ansicht eines Ausführungsbeispiels eines Parksystems 222 gemäß der Erfindung mit einem weiteren Ausführungsbeispiel einer Datenverarbeitungsvorrichtung 200 gemäß der Erfindung. Zur Vermeidung von Wiederholungen werden nachfolgend im Wesentlichen nur die Unterschiede zu dem Ausführungsbeispiel nach Figur 1 beschrieben und ansonsten auf die vorherigen Ausführungen verwiesen.

Das Parksystem 222 umfasst zumindest eine Datenverarbeitungsvorrichtung 200, mindestens eine Ladestation 250 (vorzugsweise eine Mehrzahl von Ladestationen 250) und mindestens eine Kamera 242 (vorzugweise eine Mehrzahl von Kameras 242).

Die mindestens eine Kamera 242 ist an der mindestens einen Durchfahrt 236 (des Parksystems 222) angeordnet. Vorzugsweise können eine Mehrzahl von Durchfahrten 236 vorgesehen sein. Beispielsweise kann mindestens eine Einfahrt und mindestens eine Ausfahrt in dem Parksystem 222 vorgesehen sein.

An einer Durchfahrt 236 kann eine Zufahrtsvorrichtung 238 angeordnet sein. Die Zufahrtsvorrichtung 238 ist insbesondere eingerichtet zum Steuern bzw. Kontrollieren eines Durchfahrens dieser Durchfahrt 236. Insbesondere kann durch die Zufahrtsvorrichtung 238 ein Durchfahren der Durchfahrt 236 durch ein Fahrzeug 248 von einem ersten Bereich 246, insbesondere einem Zufahrtsabschnitt (der in Fahrtrichtung des Fahrzeugs 248 vor der Zufahrtsvorrichtung 238 angeordnet ist) in einen weiteren Bereich 244 gesteuert werden.

Wenn die Zufahrtsvorrichtung 238 z.B. an einer Parkhaus-Einfahrt angeordnet ist, stellt der erste Bereich 246 insbesondere den nicht kontrollierten Bereich dar und der weitere Bereich 244 den kontrollierten Bereich, insbesondere den Parkbereich bzw. die Parkvorrichtung 252. Wenn die Zufahrtsvorrichtung 238 z.B. an einer Parkhaus-Ausfahrt angeordnet ist, verhält es sich umgekehrt.

Zum Freigeben eines Durchfahrens durch die Zufahrtsvorrichtung 238 kann ein (nicht gezeigter) ansteuerbarer Aktor (z.B. ein Elektromotor) in der Zufahrtsvorrichtung 238 vorgesehen sein. Der Aktor kann insbesondere eingerichtet sein zum Verfahren eines Schrankenbaums 240 (oder eines ähnlichen Sperrelements) zwischen einer Sperrposition und einer geöffneten Position, abhängig von einem Ansteuersignal bzw. Freigabesignal.

Ein Freigeben, also vorliegend insbesondere ein Öffnen der Zufahrtsvorrichtung 238, kann davon abhängen, ob ein Nutzer zum Durchfahren der Durchfahrt 236 berechtigt ist (oder nicht).

Die mindestens eine Kamera 242 (insbesondere zusammen mit einem Bildauswertungsmodul der Kamera 242 und/oder der Datenverarbeitungsvorrichtung 200) ist eingerichtet zum Erfassen des Fahrzeugkennzeichens des Fahrzeugs 248. Wie in der Figur 2 dargestellt ist, kann die Kamera 242 derart angeordnet sein, dass das Fahrzeugkennzeichen eines (jeden) in dem Zufahrtsabschnitt befindlichen Fahrzeugs 248 erfasst wird. Eine entsprechende Anordnung der mindestens einen Kamera 242 ermöglicht eine optionale Prüfung einer Berechtigung eines Durchfahrens der Durchfahrt 236 anhand des erfassten Fahrzeugkennzeichens.

Beispielsweise kann bei einer Einfahrt des Parksystems 222 das erfasste Fahrzeugkennzeichen mit einer vorgegebenen Sperrliste verglichen werden, die gesperrte Fahrzeugkennzeichen enthält. Ein Durchfahren der Zufahrtsvorrichtung 238 kann nur dann freigegeben werden, wenn das erfasste Fahrzeugkennzeichen nicht in der Sperrliste vorhanden ist.

Bei einer Ausfahrt kann beispielsweise geprüft werden, ob mindestens ein vorgegebenes Ausfahrtkriterium für das erfasste Fahrzeugkennzeichen erfüllt ist. Beispielsweise kann geprüft werden, ob ein Park- und/oder Ladevorgang vollständig bezahlt wurde, und/oder ob in dem Fahrzeugladedatensatz des erfassten Fahrzeugkennzeichens ein Zahlungsdatum gespeichert ist, dass eine automatische Abrechnung des Park- und/oder Ladevorgangs (insbesondere im Nachgang des Park- und/oder Ladevorgangs) erlaubt.

Um Daten zwischen der mindestens einen Kamera 242 und der Datenverarbeitungsvorrichtung 200 und/oder um Daten zwischen der mindestens einen Ladestation 250 und der Datenverarbeitungsvorrichtung 200 auszutauschen, kann das Parksystem 222 mindestens ein (nicht gezeigtes) drahtloses und/oder drahtgebundenes Kommunikationsnetz umfassen. Es versteht sich, dass zwei oder mehr Kommunikationsnetze mit jeweils unterschiedlicher Übertragungstechnologie vorgesehen sein können.

Die Ladestation 250 kann mindestens einen Ladepunkt 256 (vorzugsweise zumindest zwei Ladepunkte 256) umfassen. Zum Übertragen von elektrischer Energie kann zwischen dem Ladepunkt 256 und einem Ladeanschluss 258 des Fahrzeugs 248 ein Ladekabel 254 angeschlossen werden. Ferner ist die Ladestation 250 eingerichtet zum Kommunizieren mit dem Fahrzeug 248, insbesondere mit einem Ladesteuergerät 270 des Fahrzeugs 248. Das Ladesteuergerät 270 ist insbesondere ein Electric Vehicle Communication Controller (EVCC). Vorzugsweise kann (unmittelbar) nach einem Anschließen des Ladekabels 254 an den Ladepunkt 256 und den Ladeanschluss 258 zumindest eine Fahrzeugladekennung (insbesondere die EVCC-ID) durch die Ladestation 250 von dem Fahrzeug 248 (insbesondere dem Ladesteuergerät 270) empfangen werden. Es versteht sich, dass weitere Ladedaten (z.B. max. Ladestrom etc.) zwischen der Ladestation 250 und dem Ladesteuergerät 270 ausgetauscht werden können.

Die Ladestation 250 kann einen Energiemengenzähler 266 zum Messen der mit dem Fahrzeug 248 ausgetauschten elektrischen Energiemenge umfassen. Vorliegend umfasst die Ladestation 250 ferner mindestens eine Schnittstelle 260 insbesondere in Form einer Nutzerschnittstelle (z.B. ein Touchdisplay). Die Schnittstelle 260 ist insbesondere zumindest eingerichtet zum Ermöglichen einer Eingabe eines Fahrzeugkennzeichens in Zusammenhang mit einem Initialladevorgang. Ferner kann die Ladestation 250 eine (nicht gezeigte) optische Anzeige umfassen, beispielsweise zum Anzeigen eines Reservierungszustands der Ladestation 250, wie beschrieben wurde.

Darüber hinaus umfasst das Parksystem 222 vorliegend mindestens ein (ansteuerbares) Fahrzeugleitmodul 264, insbesondere in Form einer auf einem mobilen Endgerät 262 eines (nicht gezeigten) Nutzers des Fahrzeugs installierten Parkanwendung (insbesondere ausführbar durch einen Prozessor des mobilen Endgeräts 262). Alternativ oder zusätzlich können optische Anzeigen in dem Parksystem (z.B. an Wänden, Pfeilern, in Form eines freistehenden Displays etc.) angeordnet sein.

Gemäß dem dargestellten bevorzugten Ausführungsbeispiel der Datenverarbeitungsvorrichtung 200 kann die Datenverarbeitungsvorrichtung 200 neben einem Prozessor 202, einem ersten Empfangsmodul 204, einem zweiten Empfangsmodul 206, einem Zuordnungsmodul 208, einem Freigabemodul 210 und einer Datenbank 212 optional mindestens ein weiteres durch den Prozessor ausführbares Modul 220 bis 234 umfassen.

Vorzugsweise umfasst die Datenverarbeitungsvorrichtung 200 ein drittes Empfangsmodul 224. Das dritte Empfangsmodul 224 kann eingerichtet sein zumindest zum Empfangen eines Fahrzeugkennzeichens eines Fahrzeugs 248 von einer Schnittstelle des Parksystems 222, wie der Schnittstelle 260 der Ladestation 250, in Zusammenhang mit einem mit diesem Fahrzeug 248 durchgeführten Initialladevorgang. Ferner kann die Datenverarbeitungsvorrichtung 200 ein Erzeugungsmodul 230 umfassen. Das Erzeugungsmodul 230 kann eingerichtet sein zum Erzeugen eines Fahrzeugladedatensatzes, enthaltend zumindest das empfangene Fahrzeugkennzeichen und die im Zusammenhang mit dem Initialladevorgang durch die Ladestation 250 über das Ladekabel 254 erfasste Fahrzeugladekennung, die insbesondere durch das zweite Empfangsmodul 206 empfangen wird.

Ein Speichermodul 232 des Parksystems 222 kann eingerichtet sein zum Speichern des erzeugten Fahrzeugladedatensatz in der Datenbank 212. Wie bereits beschrieben wurde, kann über die Schnittstelle 260 oder eine andere (nicht dargestellte) Schnittstelle des Parksystems mindestens ein weiteres Ladefahrzeugdatum (z.B. eine Fahrzeugidentifikationsnummer, mindestens ein Zahlungsdatum, mindestens ein Kontaktdatum, mindestens ein Authentifizierungsdatum, ein Nutzername, mindestens ein Adressdatum, mindestens ein Loyaltydatum, mindestens ein Ladetechnikdatum und/oder dergleichen) erfasst und insbesondere durch das Erzeugungsmodul 230 bzw. das Speichermodul 232 dem Fahrzeugladedatensatz hinzugefügt werden.

Darüber hinaus kann die Datenverarbeitungsvorrichtung 200 ein Abrechnungsmodul 234 umfassen, das insbesondere eingerichtet ist zum Abrechnen des Park-Ladevorgangs des Fahrzeugs 248, zumindest basierend auf einer während eines abgeschlossenen Ladevorgangs abgegebenen Energieangabe und einer Parkdauerangabe. Die Energieangabe kann insbesondere durch den Energiemengenzähler 266 der Ladestation 250 dem Abrechnungsmodul 234 über das genannte Kommunikationsnetz zur Verfügung gestellt werden. Die Parkdauerangabe kann beispielsweise aus der Einfahrtzeit des Fahrzeugs 248 und der Ausfahrtzeit des Fahrzeugs automatisch bestimmt werden. Es versteht sich, dass auch der Bezahlzeitpunkt an einem Automaten oder dergleichen zum Bestimmen der Parkdauerangabe herangezogen werden kann. In beschriebener Weise kann dann mittels Tarifdaten der zu entrichtende Gesamtbetrag für den Park- und Ladevorgang ermittelt und beispielsweise abgerechnet werden, basierend auf dem gespeicherten Zahldatum (automatisch).

Besonders bevorzugt kann die Datenverarbeitungsvorrichtung 200 ein viertes Empfangsmodul 226 umfassen. Dieses Empfangsmodul 226 kann eingerichtet sein zum Empfangen einer Ladestationsreservierungsanfrage, enthaltend zumindest ein Fahrzeugkennzeichen des zu ladenden Fahrzeugs 248 und eine Reservierungszeitangabe, beispielsweise von einem Endgerät des Nutzers des Fahrzeugs 248, wie dem mobilen Endgerät 262. Ein Ladestationsreservierungsmodul 220 kann eingerichtet sein zum Bestimmen einer dem erhaltenen Fahrzeugkennzeichen zugeordneten Fahrzeugladekennung, basierend auf den in der Datenbank 212 gespeicherten Fahrzeugladedatensätzen. Ferner kann das Ladestationsreservierungsmodul 220, beispielsweise vor oder nach dem genannten Bestimmen, prüfen, ob für die angefragte Reservierungszeitangabe mindestens eine Ladestation 260 des Parksystems 222 verfügbar ist. Insbesondere kann die Datenverarbeitungsvorrichtung 200 eine Ladereservierungsdatenbank 228 umfassen, in denen Ladereservierungsdatensätze gespeichert sein können. Ein Ladereservierungsdatensatz kann das Fahrzeugkennzeichen des zu ladenden Fahrzeugs 248, die bestimmte Fahrzeugladekennung und die Reservierungszeitangabe enthalten, also die Zeitdauer, während der eine Ladestation 250 für dieses Fahrzeug 248 reserviert ist.

Sofern keine verfügbare Ladestation 250 für die angefragte Reservierungszeitangabe festgestellt wird, kann die Ladestationsreservierungsanfrage abgelehnt werden, beispielsweise durch Senden einer entsprechenden Antwort auf die empfangene Ladestationsreservierungsanfrage. Wenn durch das Ladestationsreservierungsmodul 220 festgestellt wird, dass mindestens eine Ladestation 250 verfügbar ist, kann eine verfügbare Ladestation 250 durch Erzeugen eines Ladereservierungsdatensatzes durch das Ladestationsreservierungsmodul 220 reserviert werden. Der erzeugte Ladereservierungsdatensatz enthält das empfangene Fahrzeugkennzeichen, die anhand des empfangenen Fahrzeugkennzeichens bestimmte Fahrzeugladekennung und die empfangene Reservierungszeitangabe. Zusätzlich kann der Ladereservierungsdatensatz die Ladestationskennung 250 der reservierten Ladestation und/ oder ein Ladetechnikdatum enthalten. Der erzeugte Ladereservierungsdatensatz kann, insbesondere durch das Speichermodul 232, in der Ladereservierungsdatenbank 228 gespeichert werden.

Durch das Erzeugen eines Ladereservierungsdatensatzes ist das Ladestationsreservierungsmodul 220 insbesondere eingerichtet zum Reservieren einer Ladestation 250 des Parksystems 222, derart, dass abhängig von der Reservierungszeitangabe ein Ladevorgang an der reservierten Ladestation 250 nur bei einem Empfangen der in dem Ladereservierungsdatensatz gespeicherten Fahrzeugladekennung freigegeben wird. Alternativ oder zusätzlich kann eine zuvor beschriebene dynamische Reservierungsvariante implementiert sein.

Wenn beispielsweise nach einem Anschließen eines Fahrzeugs 248 über das Ladekabel 254 an die Ladestation 250 die Fahrzeugladekennung an die Ladestation 250 übertragen wird und diese der Datenverarbeitungsvorrichtung 200 zur Verfügung gestellt wird, kann vor einem Freigeben geprüft werden, insbesondere durch das Freigabemodul 210, ob die Ladestation 250 reserviert ist, also ob ein Ladereservierungsdatensatz für diese Ladestation 250 und für die augenblickliche Zeit (und/oder einen zukünftigen Zeitpunkt, der innerhalb eines vorgegebenen Zeitrahmens liegt (z.B. innerhalb der nächsten 15 Minuten, 30 Minuten etc.) vorhanden bzw. gespeichert ist. Wenn das Freigabemodul 210 feststellt, dass kein Ladereservierungsdatensatz für die Ladestation 250 vorliegt, kann ein Freigeben des Ladevorgangs in vorbeschriebener Weise erfolgen.

Wenn das Freigabemodul 210 feststellt, dass ein Ladereservierungsdatensatz für die Ladestation 250 vorliegt, kann überprüft werden, ob die empfangene Fahrzeugladekennung identisch ist mit der in diesem Ladereservierungsdatensatz gespeicherten Fahrzeugladekennung. Nur wenn das Freigabemodul 210 eine Identität zwischen der empfangenen Fahrzeugladekennung und der in dem genannten Ladereservierungsdatensatz gespeicherten Fahrzeugladekennung feststellt, kann ein Freigeben des Ladevorgangs in vorbeschriebener Weise erfolgen. Andernfalls wird ein Durchführen eines Ladevorgangs, insbesondere durch das Freigabemodul 210, blockiert und beispielsweise ein Anzeigen einer entsprechenden Information an der mindestens einen (optischen) Anzeige der Ladestation 250 bewirkt werden.

Wie beschrieben wurde, kann zusätzlich mindestens eine (optische) Anzeige an der Ladestation 250 vorgesehen sein, um den Reservierungszustand (insbesondere verfügbar oder nicht verfügbar) anzuzeigen.

Vorzugsweise kann die Datenverarbeitungsvorrichtung 200 ein Routingmodul 272 umfassen. Insbesondere kann das erste Empfangsmodul 204 jedes empfangene Fahrzeugkennzeichen dem Routingmodul 272 zur Verfügung stellen. Das Routingmodul 272 kann insbesondere eingerichtet sein zum Ansteuern mindestens eines Fahrzeugleitmoduls 264 bei Empfangen des in dem Ladereservierungsdatensatz enthaltenden Fahrzeugkennzeichens durch das erste Empfangsmodul 204, derart, dass das durch die Durchfahrt 236 gefahrene Fahrzeug 248 zu der reservierten Ladestation 250 und/oder einer freien Ladestation 250 bzw. einem Bereich mit mindestens einer freien Ladestation geleitet wird, basierend auf der in dem Ladereservierungsdatensatz enthaltenen Ladestationskennung.

Insbesondere kann das Routingmodul 272 für jedes empfangene Fahrzeugkennzeichen prüfen, ob ein Ladereservierungsdatensatz in der Ladereservierungsdatenbank 228 vorhanden ist und/oder ob ein Fahrzeugladedatensatz in der Datenbank vorhanden ist. Wenn kein Reservierungsdatensatz und kein Fahrzeugladedatensatz vorhanden ist, kann eine Aktion des Routingmoduls 272 unterbleiben. Wenn durch das Routingmodul 272 ein Ladereservierungsdatensatz und/ oder ein Fahrzeugladedatensatz bestimmt wird, der ein Fahrzeugkennzeichen enthält, das identisch ist mit dem empfangenen Fahrzeugkennzeichen, kann ein Ansteuern des mindestens einen Fahrzeugleitmoduls 264 durch das Routingmodul 272 erfolgen.

Insbesondere können für die reservierte Ladestation 250 bzw. eine freie Ladestation 250 bzw. einen Bereich mit mehreren freien Ladestationen Routingangaben gespeichert werden/sein. Diese können in dem vorliegenden Ausführungsbeispiel, bewirkt durch das Routingmodul 272, in Form eines Routingdatensatzes an das mobile Endgerät 262 des Nutzers (insbesondere anhand eines gespeicherten Kontaktdatums) übertragen werden. Der Routingdatensatz kann die Routingangaben und Instruktionen enthalten, die, wenn sie unter Steuerung der Parkanwendung 264 durch einen Prozessor des mobilen Endgeräts 262 ausgeführt werden, diesen veranlassen, die Routingangaben durch eine optische Anzeige und/oder eine akustische Schnittstelle des mobilen Endgeräts 262 auszugeben. Insbesondere kann die Parkanwendung 264 anhand der augenblicklichen Fahrzeugposition (z.B. ermittelt durch das mobile Endgerät 262 durch z.B. GPS, Bluetooth, WLAN und/oder dergleichen) und den Routingangaben Navigationsangaben anzeigen, um das Fahrzeug 248 bzw. den Nutzer (von der augenblicklichen Fahrzeugposition) zu der reservierten Ladestation 250 zu leiten.

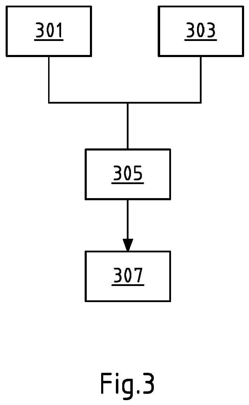

Die Figur 3 zeigt ein Diagramm eines Ausführungsbeispiels eines Verfahrens, insbesondere eines computerimplementierten Verfahrens, das insbesondere von einem Prozessor einer zuvor beschriebenen Datenverarbeitungsvorrichtung (z.B. Fig. 1 und/oder 2) ausführbar ist.

In einem Schritt 301 erfolgt ein Empfangen eines ersten Kennzeichendatensatzes, enthaltend zumindest ein durch mindestens eine Kamera des Parksystems erfasstes Fahrzeugkennzeichen eines durch eine Durchfahrt gefahrenen Fahrzeugs, wie beschrieben wurde.

In einem Schritt 303 erfolgt ein Empfangen eines Ladeanfragedatensatzes, enthaltend zumindest eine durch eine Ladestation über ein mit dem Fahrzeug verbundenes Ladekabel erfasste Fahrzeugladekennung, wie beschrieben wurde.

Eine Mehrzahl von Fahrzeugladedatensätzen ist in einer Datenbank der Datenverarbeitungsvorrichtung gespeichert. Jeder Fahrzeugladedatensatz enthält zumindest eine Fahrzeugladekennung und ein Fahrzeugkennzeichen eines jeweiligen Fahrzeugs, wie beschrieben wurde.

In Schritt 305 erfolgt ein Zuordnen der empfangenen Fahrzeugladekennung zu dem empfangenen ersten Kennzeichendatensatz, basierend auf den gespeicherten Fahrzeugladedatensätzen, wie beschrieben wurde.

In Schritt 307 erfolgt ein automatisches Freigeben eines Ladevorgangs zum Laden des mit der Ladestation über das Ladekabel verbundene Fahrzeug nur bei einem Zuordnen der empfangenen Fahrzeugladekennung zu dem ersten Kennzeichendatensatz, wie beschrieben wurde. Wenn ein Zuordnen nicht erfolgen kann, weil kein Fahrzeugladedatensatz in der Datenbank vorhanden ist, in dem die empfange Fahrzeugladekennung und das empfangene Fahrzeugkennzeichen enthalten ist, kann ein automatisches Freigeben des Ladevorgangs blockiert werden. Insbesondere kann dann ein herkömmliches Freigeben des Ladevorgangs erfolgen, beispielsweise mittels einer Ladekarte des Nutzers.

### Bezugszeichenliste:

- 100: Datenverarbeitungsvorrichtung
- 102: Prozessor
- 104: erstes Empfangsmodul
- 106: zweites Empfangsmodul
- 108: Zuordnungsmodul
- 110: Freigabemodul
- 112: Datenbank
- 200: Datenverarbeitungsvorrichtung
- 202: Prozessor
- 204: erstes Empfangsmodul
- 206: zweites Empfangsmodul
- 208: Zuordnungsmodul
- 210: Freigabemodul
- 212: Datenbank
- 220: Ladestationsreservierungsmodul
- 222: Parksystem
- 224: drittes Empfangsmodul
- 226: viertes Empfangsmodul
- 228: Ladereservierungsdatenbank
- 230: Erzeugungsmodul
- 232: Speichermodul
- 234: Abrechnungsmodul
- 236: Durchfahrt
- 238: Zufahrtsvorrichtung
- 240: Schrankenbaum
- 242: Kamera
- 244: zweiter Bereich
- 246: erster Bereich
- 248: Fahrzeug
- 250: Ladestation
- 252: Parkvorrichtung
- 254: Ladekabel
- 256: Ladepunkt
- 258: Ladeanschluss
- 260: Schnittstelle
- 262: mobiles Endgerät
- 264: Fahrzeugleitmodul
- 266: Energiemengenzähler
- 270: Ladesteuergerät
- 272: Routingmodul
- 448: Elektrofahrzeug
- 450: Ladestation
- 480: Ladestationsbetreiber
- 482: Managementsystem
- 484: Anbieter
- 486: Dienstleister
- 488: Nutzer

## Patentansprüche

1. Datenverarbeitungsvorrichtung (100, 200) für ein Parksystem (222) mit mindestens einer Ladestation (250), umfassend:
- ein erstes Empfangsmodul (104, 204), eingerichtet zum Empfangen eines ersten Kennzeichendatensatzes, enthaltend zumindest ein durch mindestens eine Kamera (242) des Parksystems (222) erfasstes Fahrzeugkennzeichen eines durch eine Durchfahrt (236) gefahrenen Fahrzeugs (248),
- ein zweites Empfangsmodul (106, 206), eingerichtet zum Empfangen eines Ladeanfragedatensatzes, enthaltend zumindest eine durch eine Ladestation (250) über ein mit dem Fahrzeug (248) verbundenes Ladekabel (254) erfasste Fahrzeugladekennung,
- mindestens eine Datenbank (112, 212), eingerichtet zum Speichern einer Mehrzahl von Fahrzeugladedatensätzen, enthaltend jeweils zumindest eine Fahrzeugladekennung und ein Fahrzeugkennzeichen eines jeweiligen Fahrzeugs (248),
- ein Zuordnungsmodul (108, 208), eingerichtet zum Zuordnen der empfangenen Fahrzeugladekennung zu dem empfangenen ersten Kennzeichendatensatz, basierend auf den in der Datenbank (112, 212) gespeicherten Fahrzeugladedatensätzen, und
- ein Freigabemodul (110, 210), eingerichtet zum automatischen Freigeben eines Ladevorgangs zum Laden des mit der Ladestation (250) über das Ladekabel (254) verbundenen Fahrzeugs (248) nur bei einem Zuordnen der empfangenen Fahrzeugladekennung zu dem ersten Kennzeichendatensatz.

2. Datenverarbeitungsvorrichtung (100, 200) nach Anspruch 1, **dadurch gekennzeichnet, dass**
- die Fahrzeugladekennung die EVCC-Kennung eines Ladesteuergeräts (270) des Fahrzeugs (248) ist.

3. Datenverarbeitungsvorrichtung (100, 200) nach Anspruch 1 oder 2, **dadurch gekennzeichnet, dass**
- ein Fahrzeugladedatensatz mindestens ein weiteres Ladefahrzeugdatum enthält, ausgewählt aus der Gruppe, umfassend:
- eine Fahrzeugidentifikationsnummer,
- mindestens ein Zahlungsdatum,
- mindestens ein Kontaktdatum,
- mindestens ein Authentifizierungsdatum,
- ein Nutzername,
- mindestens ein Adressdatum,
- mindestens ein Loyaltydatum,
- mindestens ein Ladetechnikdatum,
- mindestens eine charakteristische Signalsignatur.

4. Datenverarbeitungsvorrichtung (100, 200) nach einem der vorherigen Ansprüche, **dadurch gekennzeichnet, dass** die Datenverarbeitungsvorrichtung (100, 200) ferner umfasst:
- ein drittes Empfangsmodul (224), eingerichtet zumindest zum Empfangen eines Fahrzeugkennzeichens eines Fahrzeugs (248) von einer Schnittstelle (260) des Parksystems (222) in Zusammenhang mit einem mit diesem Fahrzeug (248) durchgeführten Initialladevorgang,
- ein Erzeugungsmodul (230), eingerichtet zum Erzeugen eines Fahrzeugladedatensatzes, enthaltend zumindest das empfangene Fahrzeugkennzeichen und die im Zusammenhang mit dem Initialladevorgang durch die Ladestation (250) über ein Ladekabel (254) erfasste Fahrzeugladekennung, und
- ein Speichermodul (232), eingerichtet zum Speichern des erzeugten Fahrzeugladedatensatz in der Datenbank (112, 212).

5. Datenverarbeitungsvorrichtung (100, 200) nach einem der vorherigen Ansprüche, **dadurch gekennzeichnet, dass** die Datenverarbeitungsvorrichtung (100, 200) ferner umfasst:
- mindestens ein Abrechnungsmodul (234), eingerichtet zum Abrechnen des Park-Ladevorgangs, zumindest basierend auf einer während eines abgeschlossenen Ladevorgangs abgegebenen Energieangabe und einer Parkdauerangabe.

6. Datenverarbeitungsvorrichtung (100, 200) nach Anspruch 5, **dadurch gekennzeichnet, dass**
- das erste Empfangsmodul (104, 204) eingerichtet ist zum Empfangen eines zweiten Kennzeichendatensatzes, enthaltend zumindest das durch mindestens eine Kamera (242) des Parksystems (222) erfasste Fahrzeugkennzeichen eines durch eine Durchfahrt (236) des Parksystems (222) nach einem abgeschlossenen Ladevorgang gefahrenen Fahrzeugs (248),
und
- das zweite Empfangsmodul (106, 206) eingerichtet ist zum Empfangen der während des abgeschlossenen Ladevorgangs abgegebenen Energieangabe von der Ladestation (250).

7. Datenverarbeitungsvorrichtung (100, 200) nach einem der vorherigen Ansprüche, **dadurch gekennzeichnet, dass** die Datenverarbeitungsvorrichtung (100, 200) ferner umfasst:
- ein viertes Empfangsmodul (226), eingerichtet zum Empfangen einer Ladestationsreservierungsanfrage, enthaltend zumindest ein Fahrzeugkennzeichen des zu ladenden Fahrzeugs (248) und eine Reservierungszeitangabe,
- ein Ladestationsreservierungsmodul (220), eingerichtet zum Bestimmen einer dem erhaltenen Fahrzeugkennzeichen zugeordneten Fahrzeugladekennung, basierend auf den in der Datenbank (112, 212) gespeicherten Fahrzeugladedatensätzen,
- wobei das Ladestationsreservierungsmodul (220) eingerichtet ist zum Reservieren einer Ladestation (250) des Parksystems (222), derart, dass abhängig von der Reservierungszeitangabe ein Ladevorgang an der reservierten Ladestation (250) nur bei einem Empfangen der bestimmten Fahrzeugladekennung freigegeben wird,
und/oder
- das Ladestationsreservierungsmodul (220) eingerichtet ist zum Reservieren einer beliebigen Ladestation (250) des Parksystems (222) einer Mehrzahl von Ladestationen (250) des Parksystems (222), derart, dass abhängig von der Reservierungszeitangabe zumindest eine Ladestation der Mehrzahl von Ladestationen (250) des Parksystems (222) für einen Ladevorgang nur bei einem Empfangen der bestimmten Fahrzeugladekennung freigegeben wird.

8. Datenverarbeitungsvorrichtung (100, 200) nach Anspruch 7, **dadurch gekennzeichnet, dass** die Datenverarbeitungsvorrichtung (100, 200) ferner umfasst:
- ein Speichermodul (234), eingerichtet zum Speichern eines Ladereservierungsdatensatzes, enthaltend zumindest - das Fahrzeugkennzeichen des zu ladenden Fahrzeugs (248), und
- ein Routingmodul (272), eingerichtet zum Ansteuern mindestens eines Fahrzeugleitmoduls (264) bei Empfangen des in dem Ladereservierungsdatensatz enthaltenden Fahrzeugkennzeichens durch das erste Empfangsmodul (104, 204), derart, dass das durch die Durchfahrt (236) gefahrene Fahrzeug (248) zu der reservierten Ladestation (250) und/oder mindestens einer freien Ladestation (250) geleitet wird.

9. Verfahren, insbesondere computerimplementiertes Verfahren, das insbesondere von einer Datenverarbeitungsvorrichtung (100, 200) nach einem der vorherigen Ansprüche ausführbar ist, umfassend:
- Empfangen eines ersten Kennzeichendatensatzes, enthaltend zumindest ein durch mindestens eine Kamera (242) des Parksystems (222) erfasstes Fahrzeugkennzeichen eines durch eine Durchfahrt (236) gefahrenen Fahrzeugs (248),
- Empfangen eines Ladeanfragedatensatzes, enthaltend zumindest eine durch eine Ladestation (250) über ein mit dem Fahrzeug (248) verbundenes Ladekabel (254) erfasste Fahrzeugladekennung,
- wobei eine Mehrzahl von Fahrzeugladedatensätzen in einer Datenbank (112, 212) gespeichert ist, wobei jeder Fahrzeugladedatensatz zumindest eine Fahrzeugladekennung und ein Fahrzeugkennzeichen eines jeweiligen Fahrzeugs (248) enthält,
- Zuordnen der empfangenen Fahrzeugladekennung zu dem empfangenen ersten Kennzeichendatensatz, basierend auf den gespeicherten Fahrzeugladedatensätzen, und
- automatisches Freigeben eines Ladevorgangs zum Laden des mit der Ladestation (250) über das Ladekabel (254) verbundene Fahrzeug (248) nur bei einem Zuordnen der empfangenen Fahrzeugladekennung zu dem ersten Kennzeichendatensatz.

10. Computerprogramm, umfassend Befehle, die bei der Ausführung des Computerprogramms durch mindestens einen Prozessor einer Datenverarbeitungsvorrichtung (100, 200) diesen veranlassen, das Verfahren nach Anspruch 9 auszuführen und/oder zu steuern.

11. Parksystem (222), umfassend:
- mindestens eine an einer Durchfahrt (236) angeordnete Kamera (242), eingerichtet zum Erfassen eines Fahrzeugkennzeichens eines durch eine Durchfahrt (236) fahrenden Fahrzeugs (248),
- mindestens eine Ladestation (250), eingerichtet zum Empfangen einer Fahrzeugladekennung über ein mit dem Fahrzeug (248) und der Ladestation verbundenes Ladekabel (254), und
- eine Datenverarbeitungsvorrichtung (100, 200) nach einem der vorherigen Ansprüche 1 bis 8.
